# EUROPEAN PATENT APPLICATION

(11) **EP 4 591 827 A1**
(43) Date of publication of application: **30.07.2025**
(21) Application number: 23867627.4
(22) Date of filing: 22.09.2023
(51) Int. Cl.: A61C 17/34, A61C 17/22, A46B 9/06, A46B 9/04, A46B 7/00, A46B 5/00

(54) **BRUSH HEAD AND ELECTRIC TOOTHBRUSH**

(30) Priority: 23.09.2022 CN 202222549713 U; 23.09.2022 CN 202222549474 U; 23.09.2022 CN 202222549440 U; 16.06.2023 CN 202321557559 U; 31.07.2023 CN 202322046784 U
(71) Applicant: Guangzhou Stars Pulse Co., Ltd., Guangzhou, Guangdong 510620 (CN)
(72) Inventor: LIANG, Huijia, Guangzhou, Guangdong 510630 (CN); ZHANG, Yuwei, Guangzhou, Guangdong 510630 (CN)
(74) Representative: Metida
(86) International application number: PCT/CN2023/120651
(87) International publication number: WO 2024/061342

(57) **Abstract**

A brush head and an electric toothbrush are provided. The brush head includes a brush rod, a brush plate, bristles, and a soft elastic piece. The brush plate includes a bristle fixing plate and a back plate. At least one of the back plate and the bristle fixing plate is connected to the brush rod. The bristle fixing plate includes a bristle fixing surface, a back surface opposite to the bristle fixing surface, and a peripheral side surface located between the bristle fixing surface and the back surface of the bristle fixing plate. The bristles are extended from the bristle fixing surface of the bristle fixing plate. The back plate is disposed on one side of the bristle fixing plate away from the bristles. A portion of the back plate is spaced apart from the back surface of the bristle fixing plate to define a filling groove. The back plate includes a first connecting end close to the brush rod and a second connecting end away from the brush rod in the length direction. The back plate is connected to the bristle fixing plate through at least one of the first connecting end and/or the second connecting end of the back plate. The soft elastic piece is filled in the filling groove. The soft elastic piece is covered on the back plate and at least a part of the peripheral side surface of the bristle fixing plate. By providing the soft elastic piece, the brush head has good buffering performance, and the soft elastic piece is firmly connected to the brush plate and is not easy to peel off from the brush plate.

## Description

### TECHNICAL FIELD

The present disclosure relates to a technical field of oral cleaning, and in particular to a brush head and an electric toothbrush having the same.

### BACKGROUND

In the prior art, an electric toothbrush drives a brush head thereof to vibrate at high frequency, and the brush head vibrating at high frequency contacts teeth or gums to clean a user's oral cavity. However, since a brush plate of the brush head is made of hard material, such as plastic, during a high-frequency vibration of the brush head, the brush plate hits the teeth or the gums, which may cause discomfort to the user or cause damage to the oral cavity.

### SUMMARY

The present disclosure provides a brush head and an electric toothbrush, which not only have good cushioning performance, but also effectively protect teeth and gums. In addition, a soft elastic piece thereof is firmly connected to a brush plate thereof.

In a first aspect, embodiments of the present disclosure provide the brush head. The brush head comprises a brush rod, a brush plate, bristles, and a soft elastic piece. The brush rod defines a length direction. The brush plate comprises a bristle fixing plate and a back plate. At least one of the back plate and the bristle fixing plate is connected to the brush rod. The bristle fixing plate comprises a bristle fixing surface, a back surface, and a peripheral side surface. The back surface of the bristle fixing plate is opposite to the bristle fixing surface of the bristle fixing plate. The peripheral side surface of the bristle fixing plate is located between the bristle fixing surface and the back surface of the bristle fixing plate. The bristles are extended from the bristle fixing surface of the bristle fixing plate. The back plate is disposed on one side of the bristle fixing plate away from the bristles. A portion of the back plate is spaced apart from the back surface of the bristle fixing plate to define a filling groove. The back plate comprises a first connecting end close to the brush rod and a second connecting end away from the brush rod in the length direction. The back plate is connected to the bristle fixing plate through at least one of the first connecting end and/or the second connecting end of the back plate.

The soft elastic piece is filled in the filling groove. The soft elastic piece is covered on the back plate and at least a part of the peripheral side surface of the bristle fixing plate.

In a second aspect, the present disclosure provides the electric toothbrush. The electric toothbrush comprises a brush head and a brush handle assembly. The brush head comprises a brush rod, a brush plate, bristles, and a soft elastic piece. The brush rod defines a length direction. The brush plate comprises a bristle fixing plate and a back plate. At least one of the back plate and the bristle fixing plate is connected to the brush rod. The bristle fixing plate comprises a bristle fixing surface, a back surface, and a peripheral side surface. The back surface of the bristle fixing plate is opposite to the bristle fixing surface of the bristle fixing plate. The peripheral side surface of the bristle fixing plate is located between the bristle fixing surface and the back surface of the bristle fixing plate. The bristles are extended from the bristle fixing surface of the bristle fixing plate. The back plate is disposed on one side of the bristle fixing plate away from the bristles. A portion of the back plate is spaced apart from the back surface of the bristle fixing plate to define a filling groove. The back plate comprises a first connecting end close to the brush rod and a second connecting end away from the brush rod in the length direction. The back plate is connected to the bristle fixing plate through the first connecting end and/or the second connecting end of the back plate. The soft elastic piece is filled in the filling groove. The soft elastic piece is covered on the back plate and at least a part of the peripheral side surface of the bristle fixing plate. The brush handle assembly is detachably connected to the brush head.

According to the brush head and the electric toothbrush disclosed by the embodiments of the present disclosure, the portion of the back plate is spaced apart from the back surface of the bristle fixing plate to define the filling groove. The soft elastic piece is disposed to cover the back plate and fill the filling groove. The soft elastic piece further covers the back surface of the bristle fixing plate, and the soft elastic piece at least covers a circle area of the peripheral side surface, close to the back surface, of the bristle fixing plate. Therefore, the brush head of the present disclosure has two characteristics.

First, in terms of a cushioning effect, since the soft elastic piece covers the back plate and the back surface of the bristle fixing plate, a back portion of the brush head contacts the oral cavity of the user through the soft elastic piece, and the soft elastic piece at least covers the circle area of the peripheral side surface, close to the back surface, of the bristle fixing plate, so that the peripheral side surface of the brush head contacts the oral cavity of the user through the soft elastic piece, and a front side of the brush head contacts the oral cavity of the user through the bristles. In summary, except that the bristles are in contact with the oral cavity of the user, the bristle fixing plate is hardly in contact with the oral cavity of the user, and the back plate is not in contact with the oral cavity of the user. That is, the brush head is in contact with the oral cavity of the user through the soft elastic piece except for the front side thereof where the bristles are disposed. Since the soft elastic piece is made of soft material and prone to elastic deformation, the soft elastic piece has a good cushioning effect and the oral cavity of the user is effectively protected.

Second, in terms of connection stability of the soft elastic piece and the brush plate, since the soft elastic piece is filled in the filling groove, and the filling groove is formed by spacing apart the back plate from the bristle fixing plate in the thickness direction of the brush plate, the filling groove and the soft elastic piece are mutually limited, so that the soft elastic piece is unable to be loosened in the thickness direction of the brush plate, and the soft elastic piece do not peel off from the brush plate. Moreover, since the soft elastic piece at least covers the circle area of the peripheral side surface, close to the back surface, of the bristle fixing plate, the peripheral side surface of the bristle fixing plate and the soft elastic piece are also mutually limited, so that the soft elastic piece is not loosened in any direction in a plane where the brush plate is located, nor the soft elastic piece peeling off from the brush plate. In addition, the soft elastic piece is formed by injection molding on the brush plate to fill the filling groove, and cover the back plate, the back surface, and the circle area of the peripheral side surface of the bristle fixing plate, so that there is a strong bonding force between the soft elastic piece, the back plate, and the bristle fixing plate. Therefore, there is a good connection stability between the soft elastic piece and the brush plate.

### BRIEF DESCRIPTION OF DRAWINGS

In order to clearly describe technical solutions in the embodiments of the present disclosure, the following will briefly introduce the drawings that need to be used in the description of the embodiments or the prior art. Apparently, the drawings in the following description are merely some of the embodiments of the present disclosure, and those skilled in the art are able to obtain other drawings according to the drawings without contributing any inventive labor.
FIG. 1 is a structural schematic diagram of an electric toothbrush according to one embodiment of the present disclosure.
FIG. 2 is a structural schematic diagram of a brush head according to one embodiment of the present disclosure.
FIG. 3 is an exploded schematic diagram of the brush head shown in FIG. 2.
FIG. 4 is another structural schematic diagram of the brush head shown in FIG. 2.
FIG. 5 is a cross-sectional schematic diagram of the brush head taken along the line-D-D shown in FIG. 4.
FIG. 6 is an enlarged schematic diagram of portion A shown in FIG. 5.
FIG. 7 is an exploded schematic diagram of a part of the brush head shown in FIG. 2.
FIG. 8 is a structural schematic diagram of a soft elastic piece of the brush head shown in FIG. 2.
FIG. 9 is another structural schematic diagram of the soft elastic piece of the brush head shown in FIG. 2.
FIG. 10 is a cross-sectional schematic diagram of the soft elastic piece of the brush head taken along the line-F-F shown in FIG. 9.
FIG. 11 is a structural schematic diagram of an alternative embodiment of a brush plate of the brush head of the present disclosure.
FIG. 12 is a structural schematic diagram of another alternative embodiment of the brush plate of the brush head shown in FIG. 2.
FIG. 13 is a structural schematic diagram of another alternative embodiment of the brush plate of the brush head shown in FIG. 2
FIG. 14 is a structural schematic diagram of the brush head according to another embodiment of the present disclosure.
FIG. 15 is an exploded structural schematic diagram of the brush head shown in FIG. 14.
FIG. 16 is a structural schematic diagram of a part of the brush head shown in FIG. 14.
FIG. 17 is an exploded structural schematic diagram of the brush head shown in FIG. 14 where a bonding portion thereof is of a step structure.
FIG. 18 is a structural schematic diagram of a part of the brush head shown in FIG. 14 where the bonding portion thereof is of a ridge structure.
FIG. 19 is a structural schematic diagram of an alternative embodiment of the soft elastic piece of the brush head shown in FIG. 14.
FIG. 20 is a structural schematic diagram of a part of the brush head shown in FIG. 14.
FIG. 21 is a front side schematic diagram of the brush head according to another embodiment of the present disclosure.
FIG. 22 is a cross-sectional schematic diagram of a first embodiment of a brush wire of a friction increasing cluster of the brush head shown in FIG. 21.
FIG. 23 is a cross-sectional schematic diagram of a second embodiment of the brush wire of the friction increasing cluster of the brush head shown in FIG. 21.
FIG. 24 is a cross-sectional schematic diagram of a third embodiment of the brush wire of the friction increasing cluster of the brush head shown in FIG. 21.
FIG. 25 is a cross-sectional schematic diagram of a fourth embodiment of the brush wire of the friction increasing cluster of the brush head shown in FIG. 21.
FIG. 26 is a side schematic diagram of the brush head shown in FIG. 21.
FIG. 27 is an exploded structural schematic diagram of the brush head according to another embodiment of the present disclosure.
FIG. 28 is a perspective schematic diagram of the brush head shown in FIG. 27.
FIG. 29 is another perspective schematic diagram of the brush head shown in FIG. 27.
FIG. 30 is a front side schematic diagram of the brush head shown in FIG. 27.
FIG. 31 is a side schematic diagram of the brush head shown in FIG. 27.
FIG. 32 is another perspective schematic diagram of the brush head shown in FIG. 27.
FIG. 33 is a perspective schematic diagram of the brush head according to another embodiment of the present disclosure.
FIG. 34 is a perspective schematic diagram of a bristle fixing plate of the brush head shown in FIG. 33.
FIG. 35 is a perspective schematic diagram of the bristle fixing plate shown in FIG. 34.

In the drawings:
100-electric toothbrush; 10-brush head; 11-brush rod; 111-connecting section; 11a-first rod section; 11b-second rod section; 11c-second step structure; 11c1-second step surface; 113-proximal end; 115-distal end; 12-brush plate; 12a-12 filling groove; 12b-filling opening; 12a1-first section; 12a2-second section; 121, 60-bristle fixing plate; 121a, 1201, 125, 600-bristle fixing surface; 121b-back surface; 1202-outer back surface; 1203-outer peripheral surface; 121c-peripheral side surface; 121d-bristle fixing hole; 121e, 1205-slot; 122-back plate; 123-connecting portion; 124-bonding portion; 126-edge line; 1221-first connecting end; 1222-second connecting end; 1241-first step structure; 1242-ridge structure; 1243-first step surface; 1251, 127-first area; 1252, 128-second area; 129-third area; 1271- first groove; 1281-second groove; 1291-third groove 3,30, 40, 50-bristles; 14-soft elastic piece; 14a-inner peripheral surface; 14b-fitting groove; 141-first filling portion; 142-outer soft rubber contour; 143-sleeving portion; 144-second filling portion; 143a-sleeving hole; 1401-protrusion; 15-connecting piece; 20-brush handle assembly; 21-brush handle; 22-circuit board; 23-battery; 24-motor; 30a-first bristle group; 30b-second bristle group; 31-friction increasing cluster; 311-brush wire; 3111-outer surface of the brush wire; 312-friction structure; 313- outer surface of the friction increasing cluster; 3131-free end; 3132-peripheral side surface; 314-main body; 315-friction-increasing particles; 32-color indicating cluster; 33-first fluorine-containing cluster; 34-second fluorine-containing cluster; 35-third fluorine-containing cluster; 36-fourth fluorine-containing cluster; 41-first brush wire group; 411-first brush surface; 412-first brush wire cluster; 42-second brush wire group; 42a-first distribution section; 42b-second distribution section; 421-second brush surface; 422-second brush wire cluster; 422a-second inner brush wire cluster; 422b-second outer brush wire cluster; 43-third brush wire group; 431-third brush surface; 432-third brush wire cluster; 44-concave curved surface; 45-convex curved surface; 451-sharp portion; 46-first middle brush wire cluster; 47-second middle brush wire cluster; 610-first bristle fixing hole area; 611-first central bristle fixing hole; 612-first auxiliary bristle fixing area; 620-second bristle fixing hole area; 621-second central bristle fixing hole; 622-second auxiliary bristle fixing hole; 630-first circumference; 640-second circumference; 650-first reinforcing bristle fixing hole; 660-second reinforcing bristle fixing hole.

Realization of the purpose, functional features, and advantages of the present disclosure are further described with reference to the embodiments and the accompanying drawings.

### DETAILED DESCRIPTION

In order to make the purpose, technical solutions, and advantages of the present disclosure clear, the following section further describes the embodiments of the present disclosure in detail with reference to the accompanying drawings.

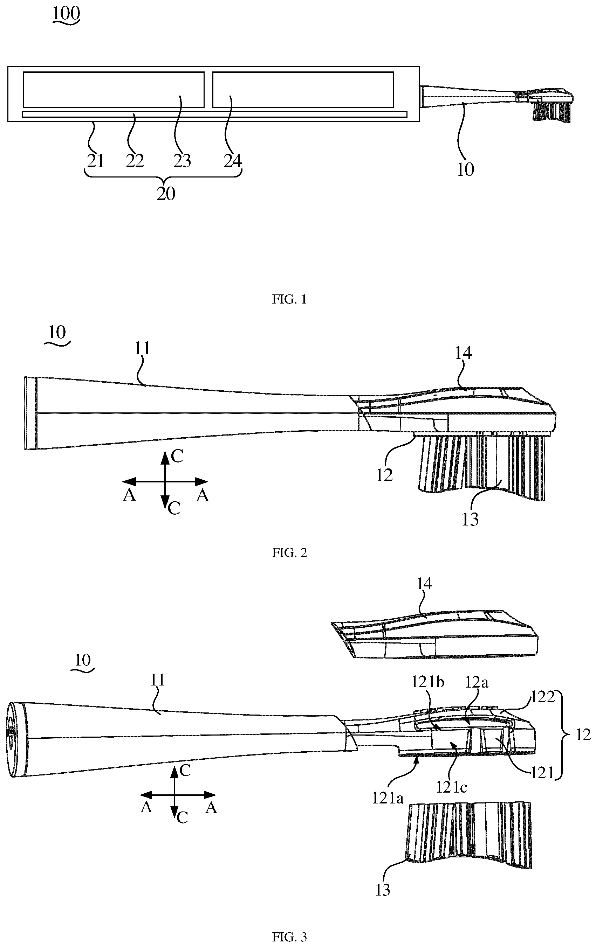

As shown in FIG. 1, in one embodiment, the present disclosure provides an electric toothbrush 100. The electric toothbrush 100 comprises a brush head 10 and a brush handle assembly 20. The brush handle assembly 20 is detachably connected to the brush head 10. The brush handle assembly 20 comprises a brush handle 21 and components, such as a circuit board 22, a battery 23, and a motor 24. The circuit board 22, the battery 23, and the motor 24 are disposed in the brush handle 21. The battery 23 supplies power to the circuit board 22, the motor 24, etc. The circuit board 22 is configured to control the motor 24 to operate. An output shaft of the motor 24 extends out of the brush handle 21 to drive the brush head 10 to vibrate, so that an oral cavity of the user is cleaned through the brush head 10 vibrated by the motor 24.

A vibration frequency of the brush head 10 is relatively high when the motor 24 drives the brush head 10 to vibrate. For instance, the vibration frequency is in a frequency range of 10,000-40,000 times/minute. Within the frequency range, if material of the brush head 10 is hard and the brush head 10 hits teeth or gums, it is easy to bring a bad usage experience to the user and it is also easy to cause damage to the teeth or the gums. In the related art, the brush head is covered with soft rubber to buffer an impact of the brush head on the teeth or the gums. However, the brush head is used in a wet and humid environment, a bonding force between the soft rubber and hard plastic is gradually reduced, causing the soft rubber to peel off.

The brush head 10 is detachably connected to the output shaft of the motor 24 to facilitate replacement of different brush heads 10 of different models or materials. It is understood that the brush head 10 in the embodiment of the present disclosure may be applied in manual toothbrushes, which also avoid the damage caused by a conventional brush head to the oral cavity, especially sensitive teeth or sensitive gums.

As shown in FIGS. 2-5, in some embodiments, the brush head 10 comprises a brush rod 11, a brush plate 12, bristles 13, and a soft elastic piece 14.

The brush rod 11 is roughly in the shape of an elongated rod. The brush rod 11 defines a length direction AA. A first end of the brush rod 11 is detachably connected to the output shaft of the motor 24, and a second end of the brush rod 11 is connected to the brush plate 12. The brush rod 11 enables the brush head 10 to have a certain length as a whole, so that the brush head 10 is able to reach various parts of the oral cavity that need to be cleaned.

As shown in FIGS. 3-5, the brush plate 12 defines a width direction BB and a thickness direction CC. The width direction BB, the thickness direction CC, and the length direction AA are perpendicular to each other. The brush plate 12 comprises a bristle fixing plate 121 and a back plate 122. The bristles 13, each of which has a proximal end and a free end, and is retained at its proximal within the bristle fixing plate 121. The brush plate 12 is connected to the second end of the brush rod 11 through at least one of the back plate 122 and the bristle fixing plate 121. When only the bristle fixing plate 121 is connected to the brush rod 11, the output shaft of the motor 24 transmits vibration energy to the bristle fixing plate 121 through the brush rod 11. Then the vibration energy is transmitted to the back plate 122 and the bristles 13. When only the back plate 122 is connected to the brush rod 11, the output shaft of the motor 24 transmits the vibration energy to the back plate 122 through the brush rod 11. Then the vibration energy is transmitted to the bristle fixing plate 121 and the bristles 13 in turn. When both of the bristle fixing plate 121 and the back plate 122 are connected to the brush rod 11, the output shaft of the motor 24 transmits the vibration energy to the bristle fixing plate 121 and the back plate 122 through the brush rod 11, and then the vibration energy is transmitted to the bristles 13 through the bristle fixing plate 121.

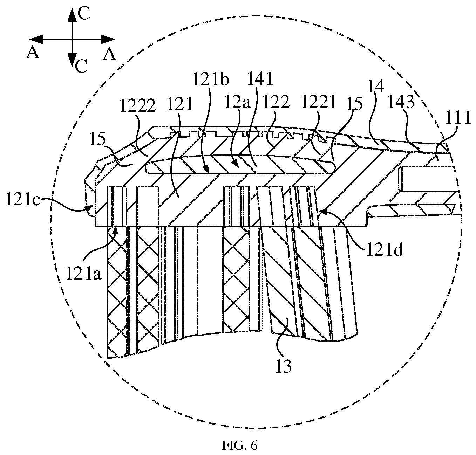

As shown in FIG. 6, the bristle fixing plate 121 is roughly of a plate structure and is configured to fix the bristles 13. The bristle fixing plate 121 comprises a bristle fixing surface 121a and a back surface 121b. The back surface 121b of the bristle fixing plate 121 is opposite to the bristle fixing surface 121a of the bristle fixing plate 121. The bristles 13 are extended from the bristle fixing surface 121a of the bristle fixing plate 121. That is, the bristle fixing surface 121a of the bristle fixing plate 121 is a surface where the bristles 13 passing through from an interior of the bristle fixing plate 121. The back surface 121b of the bristle fixing plate 121 is opposite to the bristle fixing surface 121a of the bristle fixing plate 121 and faces the back plate 122. When a user brushes his or her teeth, the bristle fixing surface 121a of the bristle fixing plate 121 is a surface facing the teeth of the user, and the back surface 121b of the bristle fixing plate 121 is a surface facing away from the teeth of the user. Further, the bristle fixing plate 121 comprises a peripheral side surface 121c located between the bristle fixing surface 121a and the back surface 121b.

The back plate 122 is disposed on one side of the bristle fixing plate 121 away from the bristles 13. Namely, the back plate 122 faces the back surface 121b of the bristle fixing plate 121. A portion of the back plate 122 is spaced apart from the back surface121b of the bristle fixing plate 121 to define a filling groove 12a. The soft elastic piece 14 is filled in the filling groove 12a, so as to improve connection stability between the soft elastic piece 14 and the brush plate 12. Furthermore, the back plate 122 comprises a first connecting end 1221 close to the brush rod 11 and a second connecting end 1222 away from the brush rod 11 in the length direction AA. The back plate 122 is connected to the bristle fixing plate 121 through at least one of the first connecting end 1221 and the second connecting end 1222 of the back plate 122, so that the back plate 122 and the bristle fixing plate 121 are fixedly connected.

As shown in FIGS. 2-7, the soft elastic piece 14 roughly covers the back plate 122, so that the back plate 122 is roughly not exposed. When the user brushes his or her teeth, a back portion of the brush head 10 is in contact with the oral cavity of the user, such as the teeth or the gums, through the soft elastic piece 14 rather than the back plate 122. During high-frequency vibration of the brush head 10, because the soft elastic piece 14 is made of soft material and is prone to elastic deformation, the soft elastic piece 14 provides a good cushioning effect and effectively protect the oral cavity of the user.

Furthermore, as shown in FIGS. 3 and 6, the soft elastic piece 14 is filled in the filling groove 12a, and the soft elastic piece 14 also covers the back plate 122, thereby increasing contact areas between the soft elastic piece 14, the bristle fixing plate 121 and the back plate 122, increasing overall connection stability between the soft elastic piece 14 and the brush plate 12, and reducing a risk of the soft elastic piece 14 peeling off from the brush plate 12.

Furthermore, as shown in FIG. 6, the soft elastic piece 14 covers on at least a part of the peripheral side surface 121c of the bristle fixing plate 121.

In this way, at least the part of the peripheral side surface 121c of the bristle fixing plate 121 of the brush head 10 is in contact with the oral cavity of the user, such as the teeth or the gums, through the soft elastic piece 14, rather than directly contacting the oral cavity of the user directly through the peripheral side surface 121c of the bristle fixing plate 121. During the high-frequency vibration of the brush head 10, because the soft elastic piece 14 is made of the soft material and is prone to elastic deformation, the soft elastic piece 14 provides the good cushioning effect and effectively protect the oral cavity of the user. For instance, the soft elastic piece 14 covers a circle area of the peripheral side surface 121c of the bristle fixing plate 121 or completely covers the peripheral side surface 121c of the bristle fixing plate 121, which increases a contact area between the soft elastic piece 14 and the peripheral side surface 121c of the bristle fixing plate 121, thereby improving the connection stability between the soft elastic piece 14 and the bristle fixing plate 121, and preventing the soft elastic piece 14 from peeling off from the brush plate 12.

In summary, the portion of the back plate 122 is spaced apart from the back surface 121b of the bristle fixing plate 121 to define the filling groove 12a. The soft elastic piece 14 is disposed to cover the back plate 121 and fill the filling groove 12a. The soft elastic piece 14 further covers the back surface 121b of the bristle fixing plate 121, and the soft elastic piece 14 at least covers the part of the peripheral side surface 121c of the bristle fixing plate 121. Therefore, the brush head 10 of the present disclosure has two characteristics.

First, in terms of the cushioning effect, since the soft elastic piece 14 covers the back plate 122 and the back surface 121b of the bristle fixing plate 121, the back portion of the brush head 10 contacts the oral cavity of the user through the soft elastic piece 14. The soft elastic piece 14 at least covers the part of the peripheral side surface 121c of the bristle fixing plate 121, so that the peripheral side surface 121c of the bristle fixing plate 121 of the brush head 10 contacts the oral cavity of the user through the soft elastic piece 14, and a front side of the brush head 10 contacts the oral cavity of the user through the bristles 13. In summary, except that the bristles 13 are in contact with the oral cavity of the user, the bristle fixing plate 121 is hardly in contact with the oral cavity of the user, and the back plate 122 is not in contact with the oral cavity of the user. That is, the brush head 10 is in contact with the oral cavity of the user through the soft elastic piece 14 except for the front side thereof where the bristles 13 are disposed. Since the soft elastic piece 14 is made of the soft material and prone to elastic deformation, the soft elastic piece 14 has the good cushioning effect and the oral cavity of the user is effectively protected.

Second, in terms of the connection stability of the soft elastic piece 14 and the brush plate 12, since the soft elastic piece 14 is filled in the filling groove 12a, and the filling groove 12a is formed by spacing apart the back plate 122 from the bristle fixing plate 121 in the thickness direction CC of the brush plate 12, the filling groove 12a and the soft elastic piece 14 are mutually limited, so that the soft elastic piece 14 is unable to be loosened in the thickness direction CC of the brush plate 12, and the soft elastic piece 14 is not peeled off from the brush plate 12. Moreover, since the soft elastic piece 14 at least covers the part of the peripheral side surface 121c of the bristle fixing plate 121, the peripheral side surface 121c of the bristle fixing plate 121 and the soft elastic piece 14 are also mutually limited, so that the soft elastic piece 14 is not loosened in any direction in a plane where the brush plate 12 is located, nor the soft elastic piece 14 being peeled off from the brush plate 12. In addition, the soft elastic piece 14 may be formed by injection molding on the brush plate 12 to fill the filling groove 12a and cover the back plate 122, the back surface 121b, and at least the part of the peripheral side surface 121c of the bristle fixing plate 121, so that there is a strong bonding force between the soft elastic piece 14, the back plate 122, and the bristle fixing plate 121. Therefore, there is the good connection stability between the soft elastic piece and the brush plate. Even if the brush head 10 is used for a long time in a high-frequency vibration scenario, the soft elastic piece 14 is hardly peeling off from the brush plate 12.

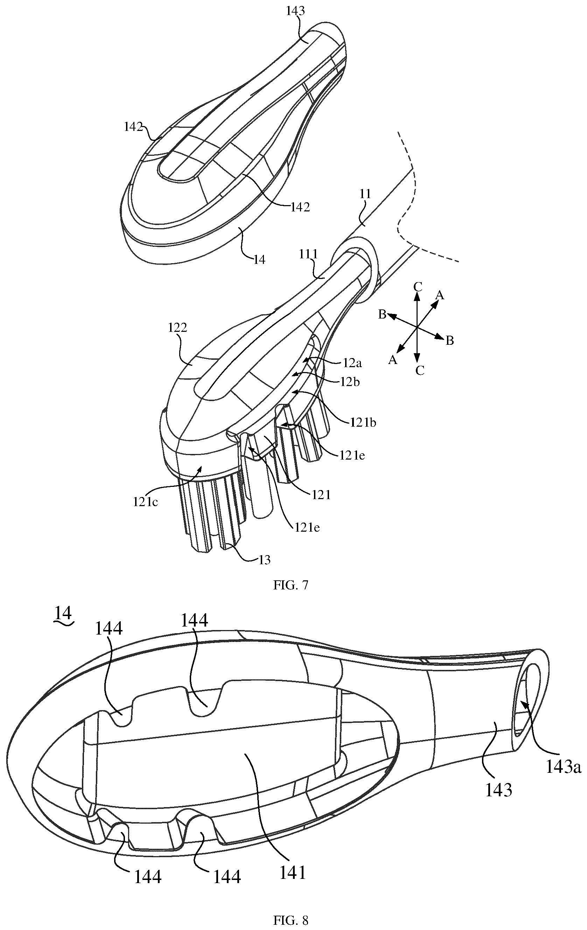

As shown in FIGS. 7-10, in some embodiments, the filling groove 12a penetrates through the brush plate 12 in the width direction BB to form two filling openings 12b opposite to each other in the width direction BB. The two filling openings 12b allow injecting liquid to flow into the filling groove 12a during an injection molding process, and the injecting liquid is solidified in the filling groove 12a to form a first filling portion 141. The soft elastic piece 14 comprises the first filling portion 141. The two filling openings 12b opposite to each other are defined on the brush plate 12 in the width direction BB, and the two filling openings 12b are communicated with the filling groove 12a. During the injection molding process, the injecting liquid flows into the filling groove 12a from the two filling openings 12b and fills the filling groove 12a. After the injecting liquid solidifies, a portion of the soft elastic piece in the filling groove 12a forms the first filling portion 141. The first filling portion 141 is sandwiched between the bristle fixing plate 121 and the back plate 122, and is protected and limited by the bristle fixing plate 121 and the back plate 122. The first filling portion 141 is directly connected to a groove wall of the filling groove 12a, thereby increasing connection stability between the first filling portion 141 and the brush plate 12. The first filling portion 141 is integrated with other portions of the soft elastic piece 14 by injection molding, which enhances the connection stability between the soft elastic piece14 and the brush plate 12.

It is noted that in the embodiments of the present disclosure, the soft elastic piece may be made from rubber, silicon, or other flexible material, which is not limited thereto. Similarly, the injecting liquid are rubber liquid, silicone liquid, or other liquid capable of being solidified into the soft elastic piece, which is not limited thereto.

By defining the two filling openings 12b, a speed of the injecting liquid flowing into the filling groove 12a is increased. In addition, the two filling openings 12b are opposite to each other, allowing the injecting liquid to flow between the two filling openings 12b, so that the injecting liquid can fill the filling groove 12a. If only one filling opening 12b is provided, and the injecting liquid flows from the one filling opening 12b, due to a surface tension of the injecting liquid, the injecting liquid may directly block the one filling opening 12b, causing air in the filling groove 12a being unable to discharge, which eventually leads to a result that the injecting liquid to be unable to completely fill the filling groove 12a. If two or more filling openings 12b communicated with each other are provided, such problem is avoided. The injecting liquid covers the peripheral side surface 121c of the bristle fixing plate 121 while filling in the filling groove 12a or the injecting liquid covers the peripheral side surface 121c of the bristle fixing plate 121 after filling in the filling groove 12a, which not only realizes injection of the injecting liquid in the filling groove 12a, but also realizes coating of the peripheral side surface 121c of the bristle fixing plate 121. Further, an injection process of the injecting liquid is easy, an overall structure of the soft elastic piece 14 is simple, and the soft elastic piece 14 is easy to form.

It should be noted that the filling groove 12a may also penetrate the brush plate 12 in another direction, such as the length direction AA, to form the two filling openings 12b opposite to each other.

As shown in FIG. 7, in some embodiments, in the thickness direction CC of the brush plate 12, a thickness of the soft elastic piece 14 at the filling openings 12b is greater than a thickness of other positions of the soft elastic piece 14, so as to form outer soft rubber contours 142 on the back portion of the brush head 10. By forming the outer soft rubber contours 142 on the back portion of the brush head 10, the thickness of the soft elastic piece 14 at the outer soft rubber contours 142 is greater than the thickness of the soft elastic piece 14 at other positions. When the user brushes his or the teeth, a back portion of the soft elastic piece 14 contacts the oral cavity of the user through the outer soft rubber contours 142. By defining the outer soft rubber contours 142, a contact area between the soft elastic piece 14 and the oral cavity is reduced, and the soft elastic piece 14 is more prone to deformation. Therefore, when the back portion of the soft elastic piece 14 is in contact with the oral cavity of the user, the soft elastic piece 14 effectively buffers the vibration and prevents the brush head 10 from vigorously hitting the teeth, so that the brush head 10 effectively protects the teeth.

As shown in FIGS. 6 -8, in some embodiments, the brush rod 11 comprises a connecting section 111 connected to the brush plate 12. The connecting section 111 is connected to at least one of the bristle fixing plate 121 and the back plate 122. The soft elastic piece 14 is also sleeved on the connecting section 111 in a ring shape. That is, the soft elastic piece 14 comprises a sleeving portion 143, and the sleeving portion 143 is sleeved on the connecting section 111. In this way, the soft elastic piece 14 is prevented from peeling off the brush rod 11 in a radial direction thereof.

Furthermore, as shown in FIG. 8, the sleeving portion 143 defines a sleeving hole 143a. The connecting section 111 is inserted into the sleeving hole 143a. A diameter of the sleeving hole 143a is less than a width of the brush plate 12 in the width direction BB. Since the brush plate 12 blocks the sleeving portion 143, the sleeving portion 143 is unable to peel off from the connecting section 111 in the length direction AA. Therefore, the connection stability between the soft elastic piece 14, the brush plate 12, and the brush rod 11 is further enhanced.

As shown in FIG. 6, in some embodiments, in the length direction AA, the filling groove 12a has a first length, the bristle fixing plate 121 has a second length, and a ratio of the first length of the filling groove 12a to the second length of the bristle fixing plate 121 is not less than 0.5. In this way, the filling groove 12a and the portion of the soft elastic piece filled in the filling groove 12a (i.e., the first filling portion 141) have a relative long length, which not only provides a larger cushioning range, but also increases a connection area between the first filling portion 141 and the groove wall of the filling groove 12a. That is, a connection area between the back surface 121b of the bristle fixing plate 121 and an inner wall surface of the back plate 122 is increased, thereby enhancing the connection stability between the first filling portion141, the bristle fixing plate 121, and the back plate 122.

In addition, the longer the filling groove 12a is, the easier the bristle fixing plate 121 and the back plate 122 are prone to deformation, thereby reducing the risk of hitting the teeth, making it easier for the bristles 13 disposed on the bristle fixing plate 121 to fit surfaces of the teeth of the user and improving a tooth cleaning effect.

As shown in FIG. 6, in some embodiments, in the thickness direction CC of the brush plate 12, a maximum thickness of the filling groove 12a is not less than 2 mm and not greater than 5 mm, so that the filling groove 12a has an appropriate thickness. On the one hand, the thickness of the filling groove 12a is large enough, so that the injecting liquid can flow into the filling groove 12a relatively easily and fill the filling groove 12a during the injection molding process. On the other hand, the maximum thickness of the filling groove 12a is not that large, so that the brush head 10 has the appropriate thickness, which reduces discomfort brought to the user after the brush head 10 is placed in the oral cavity.

If the maximum thickness of the filling groove 12a is less than 2 mm, it may be difficult for the injecting liquid to flow into the filling groove 12a and fill the filling groove 12a during the injection molding process. There is a risk that there are bubble in the filing groove 12a since the filling groove 12a is unable to be filled by the soft elastic piece 14. Furthermore, if the maximum thickness of the filling groove 12a is less than 2 mm, a thickness of the first filling portion 141 is also less than 2 mm, and the first filling portion 141 is easily damaged, causing the soft elastic piece 14 being easily peeling off from the brush plate 12.

If the maximum thickness of the filling groove 12a is greater than 5 mm, the thickness of the filling groove 12a is too large, and an overall thickness of the brush head 10 is determined by combination of the thickness of the filling groove 12a, the thickness of the bristle fixing plate 121, and a thickness of the back plate 122. As a result, the overall thickness of the brush head 10 is too large, when putting the brush head into the oral cavity, the user needs to open his or her mouth wide, which brings inconvenience to the user. Moreover, the brush head that is too thick increases the risk of hitting the teeth.

As shown FIG. 7, in some embodiments, in the width direction BB of the brush plate 12, the back plate 122 has a first width, and the bristle fixing plate 121 has a second width. The first width of the back plate 122 is less than the second width of the bristle fixing plate 121. That is, a width of the back plate 122 is less than the width of the bristle fixing plate 121. In this way, a size of the filling groove 12b is large, which makes it easier for the injecting liquid to flow into the filling groove 12a during the injection molding process, and enables the filling groove 12b to receive more soft rubber, thus bringing a better cushioning effect.

As shown in FIG. 6, in some embodiments, in the thickness direction CC of the brush plate 12, the back plate 122 has a first thickness, the bristle fixing plate 121 has a second thickness, and the first thickness of the back plate 122 is less than the second thickness of the bristle fixing plate 121. That is, the thickness of the back plate 122 is less than the thickness of the bristle fixing plate 121, so that roots of the bristles 13 (i.e., the proximal end of each of the bristles) are deeper and longer fixed in the bristle fixing plate 121, thereby improving connection stability between the bristles 13 and the bristle fixing plate 121. In addition, the thickness of the back plate 122 is less than the thickness of the bristle fixing plate 121, so that the overall thickness of the brush head 10 is effectively reduced.

As shown in FIG. 6, in some embodiments, in the thickness direction CC of the brush plate 12, the thickness of the brush plate 12 (that is, a total thickness of the bristle fixing plate 121, the filling groove 12a, and the back plate 122) is not less than 3.5 mm and not greater than 7 mm, so that the brush plate 12 has a relatively suitable thickness. In such thickness range, on one hand, the thickness of the bristle fixing plate 121, the thickness of the filling groove 12a, and the thickness of the back plate 122 are reasonably determined, so that the bristle fixing plate 121 has a relative thick thickness to fix the bristles 13, the filling groove 12a has a relative thick thickness to receive the first filling portion 141, and the back plate 122 has strong strength and is not easy to break. On the other hand, the thickness of the brush plate 12 is not too large, so that a total thickness of the soft elastic piece 14 and the brush plate 12 is not too large.

If the thickness of the brush plate 12 is less than 3.5 mm, it means that an overall thickness of the brush plate 12 is too thin, and at least one of the bristle fixing plate 121, the filling groove 12a, and the back plate 122 is too thin. If the bristle fixing plate 121 is too thin, a bristle fixing process is not facilitated. Specifically, the bristle fixing process is extremely difficult to process, and fixing performance of the bristles 13 is not satisfying. If the filling groove 12a is too thin, it is inconvenient to form the first filling portion 141, for instance, the injecting liquid may not fill the filling groove 12a to form the first filling portion or the first filling portion 141 may be too thin, such that the connection stability between the soft elastic piece 14 and the brush plate 12 is reduced. If the back plate 122 is too thin, the back plate 122 is insufficient in strength and easy to break.

If the thickness of the brush plate 12 is greater than 7 mm, it means that the thickness of the brush plate 12 is too large. That is, the total thickness of the soft elastic piece 14 and the brush plate 12 is too large.

As shown in FIG. 6, in some embodiments, in the thickness direction CC of the brush plate 12, the bristle fixing surface 121a of the bristle fixing plate 121 protrudes from the soft elastic piece 14 relative to the soft elastic piece 14, so that the peripheral side surface 121c of the bristle fixing plate 121 is partially exposed to the soft elastic piece 14. Namely, the soft elastic piece 14 only wraps the part of the peripheral side surface 121c of the bristle fixing plate 121 close to the back surface 121b, and an area of the peripheral side surface 121c close to the bristle fixing surface 121a of the bristle fixing plate 121 is not wrapped by the soft elastic piece 14. That is, the soft elastic piece 14 does not completely wraps the peripheral side surface 121c of the bristle fixing plate 121, and the area of the peripheral side surface 121c and the bristle fixing surface 121a of the bristle fixing plate 121 are exposed to the soft elastic piece 14. In this way, in the injection molding process, the injecting liquid does not flow to the bristle fixing surface 121a to block bristle fixing holes 121d, and does not affect the bristle fixing.

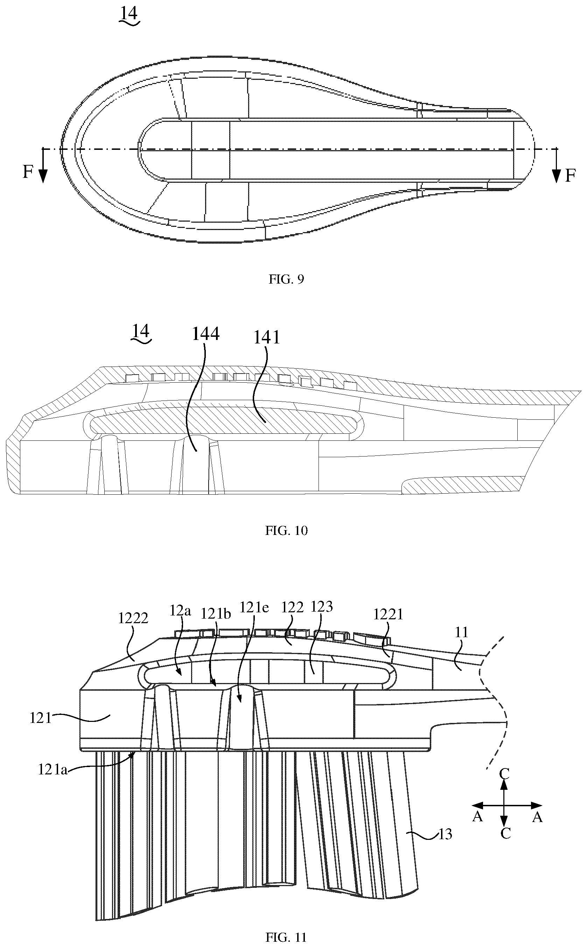

As shown in FIG. 11, in some embodiments, the back plate 122 is connected to the bristle fixing plate 121 through the first connecting end 1221 and the second connecting end 1222 thereof. The filling groove 12a is defined between the first connecting end 1221 and the second connecting end 1222 of the back plate 122. In this way, the first connecting end 1221 and the second connecting end 1222 of the back plate 122 are connected to the bristle fixing plate 121 to realize multi-point connection, which enhances the connection stability between the back plate 122 and the bristle fixing plate 121. In addition, the first connecting end 1221 and the second connecting end 1222 of the back plate 122 are disposed in sequence in the length direction AA. The first filling portion 141 is disposed in the filling groove 12a. The first connecting end 1221 and the second connecting end 1222 of the back plate 122 avoid the first filling portion 141 from moving in the length direction AA, thereby improving the connection stability between the soft elastic piece 14 and the brush plate 12.

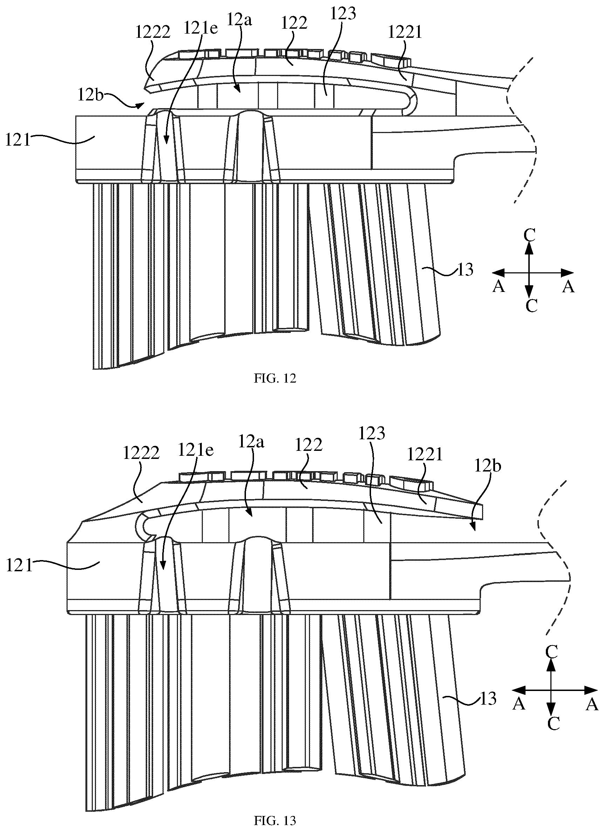

As shown in FIG. 12, in other alternative embodiments, the back plate 122 is connected to the bristle fixing plate 121 through the first connecting end 1221 thereof. The second connecting end 1222 of the back plate 122 is suspended. The filling openings 12b are defined between the second connecting end 1222 of the back plate 122 and the back surface 121b of the bristle fixing plate 121. In combination with the foregoing embodiments, the filling groove 12a penetrates through the brush plate 12 in the width direction BB to form the filling openings 12b opposite to each other. At this time, except that the first connecting end 1221 of the back plate is connected to the bristle fixing plate 121, other positions of the back plate 122 are not connected to the bristle fixing plate 121 to define the filling groove 12a. Except for one side where the first connecting end 1221 of the back plate 122 is located, other sides of the filling groove 12a is not sealed to define the filling openings 12b, so that the injecting liquid more quickly flows into the filling groove and fully fills the filling groove 12a.

As shown in FIG. 13, in other alternative embodiments, the back plate 122 is connected to the bristle fixing plate 121 through the second connecting end 1222 thereof. The first connecting end 1221 of the back plate 122 is suspended, and the filling openings 12b is defined between the first connecting end 1221 of the back plate 122 and the back surface 121b of the bristle fixing plate 121.

In combination with the foregoing embodiments, the filling groove 12a penetrates through the brush plate 12 in the width direction BB to form the filling openings 12b opposite to each other. At this time, except that the second connecting end 1222 of the back plate 122 is connected to the bristle fixing plate 121, other positions of the back plate 122 are not connected to the bristle fixing plate 121 to define the filling groove 12a. Except for one side where the second connecting end 1222 of the back plate 122 is located, other sides of the filling groove 12a is not sealed to define the filling openings 12b, so that the injecting liquid more quickly flows into the filling groove and fully fills the filling groove 12a.

As shown in FIGS. 11-13, in some embodiments, the brush plate 12 further comprises at least one connecting portion 123 disposed in the filling groove 12a. The at least one connecting portion 123 connects the back surface 121b of the bristle fixing plate 121 to the back plate 122. The back plate 122 and the bristle fixing plate 121 are connected through the at least one connecting portion 123, which improves a connection strength between the back plate 122 and the bristle fixing plate 121, and reduce the risk of the back plate 122 peeling off from the bristle fixing plate 121.

Because the back plate 122 is also extended in the length direction AA, when a plurality of connecting portions 123 are provided, the plurality of connecting portions 123 are disposed at intervals in the length direction AA to connect the back plate 122 to the bristle fixing plate 121. That is, the plurality of connecting portions 123 are disposed in the length direction AA and are connected to the back plate 122 and the bristle fixing plate 121 in a multi-point manner, so that multi-point support is realized in a middle portion of the back plate 122, preventing the back plate 122 from being broken from the middle portion thereof. In particular, when the back plate 122 is only connected to the bristle fixing plate 121 through the first connecting end 1221 or the second connecting end 1222, one of the first connecting end 1221 and the second connecting end 1222 is in a suspended state, and the first connecting end 1221 or the second connecting end 1222 thereof connected to the bristle fixing plate 121 is easier to break. By providing the at least one connecting portion 123, a stress of the first connecting end 1221 or the second connecting end 1222 is dispersed, so the back plate 122 is not easily peeled off from the bristle fixing plate 121 due to breakage.

In addition, the plurality of connecting portions 123 further limit the first filling portion 141 filled between the plurality of connecting portions 123, so the first filling portion 141 is firmly fixed in the filling groove 12a, and the soft elastic piece14 with the first filling portion 141 is less prone to peeling off from the brush plate 12.

As shown in FIG. 3, in some embodiments, the bristle fixing plate 121 and the back plate 122 are integrally formed. In this way, not only a connection process between the bristle fixing plate 121 and the back plate 122 is simplified, but also the connection stability between the bristle fixing plate 121 and the back plate 122 is improved. In addition, a one-piece component (i.e., the bristle fixing plate 121 and the back plate 122) has fewer molding times, high processing efficiency, and excellent dimensional consistency.

In some embodiments, the bristle fixing plate 121 and the brush rod 11 are integrally formed. In this way, not only a connection process between the bristle fixing plate 121 and the brush rod 11 is simplified, but also the connection stability between the bristle fixing plate 121 and the brush rod 11 is improved. In addition, a one-piece component (i.e., a combination of the bristle fixing plate 121 and the brush rod 11) has fewer molding times, high processing efficiency, and excellent dimensional consistency.

In some embodiments, the back plate 122 and the brush rod 11 are integrally formed. In this way, not only a connection process between the back plate 122 and the brush rod 11 is simplified, but also the connection stability between the back plate 122 and the brush rod 11 is improved. In addition, a one-piece component (i.e., a combination of the back plate 122 and the brush rod 11) has fewer molding times, high processing efficiency, and excellent dimensional consistency.

In some embodiments, the bristle fixing plate 121, the back plate 122, and the brush rod 11 are integrally formed. In this way, not only a connection process between the bristle fixing plate 121, the back plate 122, and the brush rod 11 is simplified, but also the connection stability between the bristle fixing plate 121, the back plate 122, and the brush rod 11 is improved. In addition, the one-piece component (i.e., a combination of the bristle fixing plate 121, the back plate 122, and the brush rod 11) has fewer molding times, high processing efficiency, and excellent dimensional consistency.

In some embodiments, the bristle fixing plate 121 and the back plate 122 are separated pieces. That is, the bristle fixing plate 121 and the back plate 122 are separately manufactured and then connected together. One of the bristle fixing plate 121 and the back plate 122 is integrally formed with the brush rod 11, thereby simplifying the connection process between the bristle fixing plate 121 or the back plate 122 and the brush rod 11, and improving the connection process between the bristle fixing plate 121 or the back plate 122 and the brush rod 11. Furthermore, as shown in FIG. 6, the brush head 10 further comprises a connecting piece 15. The connecting piece 15 is integrally formed with the bristle fixing plate 121. At least one of the first connecting end 1221 and the second connecting end 1222 of the back plate 122 is connected to the bristle fixing plate 121 through the connecting piece 15. A hardness of the connecting piece 15 and a hardness of the bristle fixing plate 121 is not greater than a hardness of the soft elastic piece 14. In this way, the bristle fixing plate 121 is more prone to elastic deformation, so that the bristles 13 on the bristle fixing plate 121 are fitter to the teeth, thereby bringing a better tooth cleaning effect.

In some embodiments, the bristle fixing plate 121 and the back plate 122 are separated pieces. The bristle fixing plate 121 and the brush rod 11 are integrally connected, the back plate 122 is connected to the bristle fixing plate 121 through the connecting piece 15, and the connecting piece 15 is harder than the soft elastic piece 14 or the connecting piece 15 is made of the same material as the software rubber piece 14.

Alternatively, the bristle fixing plate 121 and the back plate 122 are separated pieces, the back plate 122 and the brush rod 11 are integrally connected, the bristle fixing plate 121 is an independent piece, and the bristle fixing plate 121 is connected to the back plate 122 through the connecting piece 15. The connecting piece 15 is harder than the soft elastic piece 14 or the connecting piece 15 is made of the same material as the software rubber piece 14. The bristle fixing plate 121 and the back plate 122 are separated pieces, making a manufacturing process flexible. The material of the connecting piece 15 is selected to be soft to provide a better cushioning effect.

As shown in FIG. 6, in some embodiments, bristle fixing holes 121d are defined on the bristle fixing surface 121a of the bristle fixing plate 121. The bristle fixing holes 121d are blind holes. The brush head 10 further comprises copper sheets (not shown in the drawings), and the roots of the bristles 13 are fixed in the bristle fixing holes 121d through the copper sheets. That is, the bristle fixing holes 121d do not penetrate through the bristle fixing plate 121 in the thickness direction CC, and the bristles 13 are fixed on the bristle fixing plate 121 through a copper bristle fixing process, so that the bristle fixing plate 121 is thin. Further, a reinforcing effect of the bristle fixing plate 121 is superimposed with the reinforcing effect of the back plate 122 and the soft elastic piece 14, which ensures a structure strength of the brush plate 12 and allows the brush head 10 being not too thick.

In addition, assuming that there is no through hole served as bristle ironing space if the bristle fixing plate 121 and the back plate 122 are not spaced, a copper-free bristle fixing process is adopted, a proportion of the bristle fixing surface 121a of the bristle fixing plate 121 is reduced, and an vacant edge of the bristle fixing plate 121 is too large, thereby affecting the cleaning effect of the oral cavity. Instead, in the embodiment, a copper bristle fixing process is adopted, as many bristle fixing holes 121d as possible are defined on the bristle fixing surface 121a of the bristle fixing plate 121, and as many bristles 13 as possible are fixed in the bristle fixing surface 121a, so a bristle density of the bristle fixing surface 121a of the bristle fixing plate 121 is increased, thereby improving tooth cleaning efficiency of the brush head 10.

In addition, by the copper bristle fixing process, there is no need to leave the bristle ironing space at a connection position between the bristle fixing plate 121 and the back plate 122, so that the bristle fixing plate 121 and the back plate 122 can be integrally formed, which simplifies the connection process of the bristle fixing plate 121 and the back plate 122, and improves the connection strength between the bristle fixing plate 121 and the back plate 122.

In some alternative embodiments, the bristle fixing holes 121d are defined on the bristle fixing surface 121a of the bristle fixing plate 121. The bristle fixing holes 121d are through holes, the roots of the bristles 13 are inserted into the bristle fixing holes 121d, and portions of roots of the bristles 13 passing through the back surface 121b of the bristle fixing plate 121 are melted with the bristle fixing plate 121 (i.e., the portions of the roots of the bristles 13 passing through the back surface 121b of the bristle fixing plate 121 are melted by an ironing process, and are connected to the back surface 121b of the bristle fixing plate 121), thereby fixing the bristles 13 on the bristle fixing plate 121.

Furthermore, when the bristle fixing plate 121 and the back plate 122 are the separated pieces, the bristle fixing holes 121d are also defined on the connection position of the back plate 122 and the bristle fixing plate 121 for fixing the bristles. After a bristle fixing process is completed, the bristle fixing plate 121 is connected to the back plate 122. Therefore, as many bristle fixing holes 121d as possible are defined on the bristle fixing surface 121a of the bristle fixing plate 121, and as many bristles 13 as possible are fixed in the bristle fixing surface 121a, so the bristle density of the bristle fixing surface 121a of the bristle fixing plate 121 is increased, thereby improving the tooth cleaning efficiency of the brush head 10.

If the bristle fixing plate 121 and the back plate 122 are integrally formed, the bristle fixing holes 121d cannot be defined at the position of the bristle fixing plate 121 where the bristle fixing plate 121 and the back plate 122 are connected. Namely, the portions of the roots of the bristles 13 passing through the back surface 121b of the bristle fixing plate 121 cannot be melted with the bristle fixing plate 121, resulting in a decrease in the bristle density.

In addition, by the copper-free bristle fixing process (i.e., the copper sheets are not used, and the bristles are connected to the bristle fixing plate 121 through a hot-melt method), requirement for the thickness of the bristle fixing plate 121 is reduced, the bristle fixing plate 121 is allowed to be softer and thinner, cushioning performance of the bristles 13 are better, the bristles 13 fit the teeth better, which bring a better tooth brushing comfort to the user.

As shown in FIGS. 7-11, in some embodiments, at least one slot 121e is defined on the peripheral side surface 121c of the bristle fixing plate 121. When the at least one slot 121e comprises slots 121e, the slots 121e are disposed at intervals. Two ends of the at least one slot respectively extend to the bristle fixing surface 121a of the bristle fixing plate 121 and the back surface 121b of the bristle fixing plate 121. The at least one slot 121e is communicated with the filling groove 12a. The soft elastic piece 14 further comprises at least one second filling portion 144 filled in the at least one slot 121e. That is, during the injection molding process, the injecting liquid not only fills the filling groove 12a to form the first filling portion 141, but also fills the at least one slot 121e to form the at least one second filling portion 144. Therefore, a connection area between the soft elastic piece 14 and the bristle fixing plate 121 is increased, and the connection stability between the soft elastic piece 14 and the bristle fixing plate 121 is improved. Moreover, the at least one slot 121e and the soft elastic piece 14 are mutually limited, so that the soft elastic piece 14 is prevented from loosening relative to the bristle fixing plate 121. The at least one slot 121e also improves bending deformation capability of the bristle fixing plate 121 and improve the cushioning effect.

As shown in FIG. 7, in some embodiments, the at least one slot 121e has slot cross sections perpendicular to the thickness direction CC of the brush plate 12. The slot cross sections gradually increase in a direction from the back surface 121b to the bristle fixing surface 121a of the bristle fixing plate 121. In other words, the slot cross sections gradually decreases in a direction from the bristle fixing surface 121a to the back surface 121b of the bristle fixing plate 121. Accordingly, cross sections of the at least one second filling portion 144 gradually decreases in the direction from the bristle fixing surface 121a to the back surface 121b of the bristle fixing plate 121, so that after the soft elastic piece14 covers the peripheral side surface 121c of the bristle fixing plate 121, the more the soft elastic piece 14 moves toward the back portion of the brush head 10, the greater an interaction force squeezing degree of the at least one second filling portion 144 and the at least one slot 121e is, and the greater a binding force between the soft elastic piece 14 and the brush plate 12 is.

As shown in FIG. 7, in some embodiments, the peripheral side surface 121c of the bristle fixing plate 121 comprises two sub-side surfaces located on two opposite sides of a central axis of the brush rod 11. Each of the sub-side surfaces of the bristle fixing plate 121 defines the slots 121e, so that the soft elastic piece 14 is connected to the bristle fixing plate 121 at a plurality of positions thereof by filling the slots 121e, thus further improving the connection stability between the soft elastic piece 14 and the bristle fixing plate 121.

Furthermore, as shown in FIGS. 7-11, the bristle fixing plate 121 comprises a free end away from the brush rod 11, sizes of the slots 121e close to the free end of the bristle fixing plate 121 are less than sizes of the slots 121e located in middle portions of the sub-side surfaces of the bristle fixing plate 121. The slots 121e on the middle portions of the sub-side surfaces of the bristle fixing plate 121 are larger in size, so that the bristle fixing plate 121 deforms more easily on the middle portions of the sub-side surfaces of the bristle fixing plate 121, which improves the cushioning effect. The slots 121e close to the free end of the bristle fixing plate 121 are smaller in size, which leaves more area as the bristle fixing surfaces 121a of the bristle fixing plate 121, improves the bristle density, and improve the tooth cleaning effect.

The above content describes the structure of the brush head 10 that protects the oral cavity and comprises the soft elastic piece 14 and the brush plate 12 that are firmly connected. However, the structure of the brush head 10 that protects the oral cavity is not limited as mentioned above. The brush head 10 that protects the oral cavity and comprises the soft elastic piece 14 and the brush plate 12 that are firmly connected according to another embodiment is disclosed as follow.

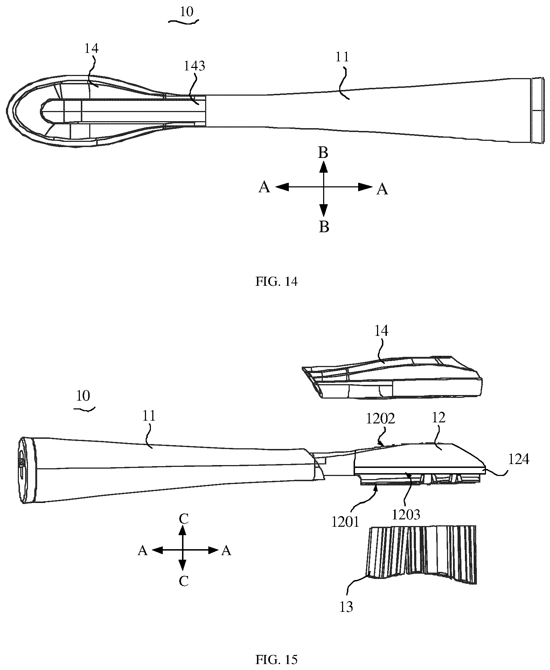

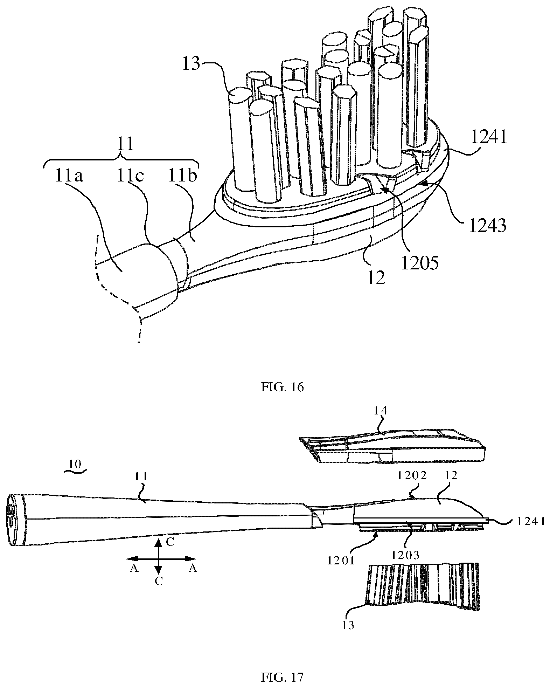

As shown in FIGS. 14-15, in another embodiment of the brush head 10, the brush head 10 comprises a brush rod 11, a brush plate 12, bristles 13, and a soft elastic piece 14. The brush plate 12 in the embodiment may comprise a filling groove 12a or may not comprise the filling groove 12a. As shown in FIG. 16 and FIG. 17, the brush plate 12 is connected to one end of the brush rod 11 in a length direction AA. The brush plate 12 defines a width direction BB and a thickness direction CC, and the width direction BB, the thickness direction CC, and the length direction AA are perpendicular to each other.

As shown in FIGS. 17-18, the brush plate 12 comprises a bristle fixing surface 1201 and an outer back surface 1202. The bristle fixing surface 1201 is opposite to the outer back surface 1202 in the thickness direction CC. The outer back surface 1202 of the brush plate 12 is a surface of the back plate 122 opposite to the bristle fixing surface 1201 of the bristle fixing plate. The bristles 13 are disposed on the bristle fixing surface 1201 of the brush plate 12. The outer back surface 1202 of the brush plate 12 is opposite to the bristles 13. Referring to the embodiments mentioned above, an outer wall surface of the back plate is disposed between the bristle fixing surface 1201 of the brush plate 12 and the outer back surface 1202 of the brush plate 12, and a peripheral side surface of the bristle fixing plate and the outer wall surface of the back plate form an outer peripheral surface 1203 of the brush plate 12. The outer peripheral surface 1203 of the brush plate 12 extends from the bristle fixing surface 1201 to the outer back surface 1202 of the brush plate 12 in the thickness direction CC.

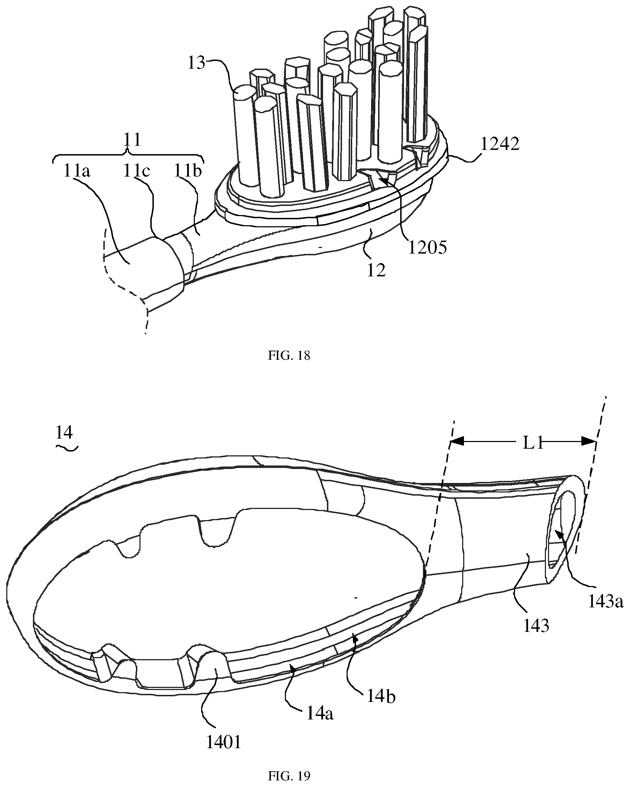

A bonding portion 124 is disposed on the outer peripheral surface 1203 of the brush plate. The bonding portion 124 is configured to connect and combine with the soft elastic piece 14. As shown in FIG. 17, the bonding portion 124 comprises a first step structure 1241, or as shown in FIG. 18, the bonding portion 124 comprises a ridge structure1242, or, the bonding portion 124 comprises the first step structure 1241 and the ridge structure1242. Comparing FIGS. 17 with FIG. 18, it is noted that a difference between the first step structure 1241 and the ridge structure1242 is that the first step structure 1241 protrudes relative to one side of the outer peripheral surface 1203 of the brush plate 12, and the ridge structure 1242 protrudes relative to two sides of the outer peripheral surface 1203 of the brush plate 12. It should be noted that the bonding portion 124 is a protrusion structure on the outer peripheral surface 1203 of the brush plate 12, so that the bonding portion 124 is embedded into the soft elastic piece14. Further, in addition to the first step structure 1241 and the ridge structure 1242, other similar structures may also be used as the bonding portion 124 of the embodiment.

Furthermore, ad shown in FIGS. 15-18, the brush plate 12 is formed by injection molding. First cross sections of the brush plate 12 are perpendicular to the thickness direction CC of the brush plate 12. The first cross sections are unchanged or gradually reduced from the bonding portion 124 to the bristle fixing surface 1201 of the bristle fixing plate 121 in the thickness direction CC. Second cross sections of the brush plate 12 are perpendicular to the thickness direction CC of the brush plate 12. The second cross sections are unchanged or gradually reduced in the thickness direction CC from the bonding portion 124 to the outer back surface 1202 of the brush plate 12.

That is, by taking the bonding portion 124 as a boundary, a portion of the brush plate 12 between the bonding portion 124 and the bristle fixing surface 1201 has the first cross sections, dimensions of the first cross sections are unchanged or gradually reduced from the bonding portion 124 to the bristles 13. Similarly, a portion of the brush plate 12 between the bonding portion 124 and the outer back surface 1202 has the second cross sections, and dimensions of the second cross sections are unchanged or gradually reduced from the bonding portion 124 to the thickness direction away from the bristles 13.

In this way, in the injection molding process of the brush plate 12, a certain plane where the bonding portion 124 is located is taken as a molding surface (the molding surface is perpendicular to the thickness direction CC), a first mold (such as an upper mold) and a second mold (such as a lower mold) are closed at the molding surface to form a molding cavity, an injection liquid is injected into the molding cavity, and after the injection liquid solidifies, the brush plate 12 is formed. Afterwards, demolding is performed. Since the dimensions of the first cross sections are unchanged or gradually reduced, the first mold is smoothly removed. Similarly, since the dimensions of the second cross sections are unchanged or gradually reduced, the second mold is smoothly removed. Therefore, the brush plate 12 is taken out after removing the first mold and the second mold.

The bristles 13 are disposed on the brush plate 12 and extend from the bristle fixing surface 1201 of the brush plate. That is, the roots of the bristles 13 are embedded in the brush plate 12 and extend out of the brush plate 12 from the bristle fixing surface 1201 of the brush plate 12. The bristles 13 are disposed on the brush plate 12 through a copper bristle fixing process or a copper-free bristle fixing process.

The soft elastic piece 14 is injection molded on an outer side of the brush plate 12 and connected to the brush plate 12. Specifically, after the brush plate 12 is formed through the injection molding process, the soft elastic piece 14 is molded on the outer side of the brush plate 12 through a secondary injection molding process or a two-color injection molding process, so as to realize connection between the soft elastic piece 14 and the brush plate 12.

After the soft elastic piece14 and the brush plate 12 are integrally injection molded, the soft elastic piece14 is covered on the outer back surface 1202 and the outer peripheral surface 1203 of the brush plate 12. In this way, a connection area between the soft elastic piece14 and the brush plate 12 is increased, and connection stability between the soft elastic piece14 and the brush plate 12 is enhanced. Specifically, the outer back surface 1202 of the brush plate 12 prevents the soft elastic piece14 from peeling off in the direction close to the bristles 13, and the outer peripheral surface 1203 of the brush plate 12 prevents the soft elastic piece14 from moving laterally (a transverse direction is any direction perpendicular to the thickness direction CC) to peel off from the brush plate 12.

Since the soft elastic piece 14 covers on the outer peripheral surface 1203 of the brush plate 12 and the bonding portion 124 is disposed on the outer peripheral surface 1203 of the brush plate 12, the soft elastic piece 14 also covers on the bonding portion 124. Specifically, as shown in FIG. 19, the soft elastic piece 14 comprises an inner peripheral surface 14a opposite to the outer peripheral surface 1203 of the brush plate 12. The inner peripheral surface 14a of the soft elastic piece 14 defines a fitting groove 14b due to an existence of the bonding portion 124 during the injection molding process of the soft elastic piece 14. The bonding portion 124 is embedded in the fitting groove 14b, so that the bonding portion 124 and the fitting groove 14b are matched and connected. In this way, not only is the soft elastic piece 14 prevented from being peeled off from the brush plate 12 in the thickness direction CC close to or away from the bristles 13, but also the soft elastic piece 14 is prevented from moving laterally away from the brush plate 12, which further enhances the connection stability between the soft elastic piece 14 and the brush plate 12. Even if the brush head 10 is in a humid environment for a long time, it is ensured that the soft elastic piece 14 does not peel off from the brush plate 12.

To sum up, in the embodiment, the soft elastic piece 14 is injection molded on the outer side of the brush plate 12, and a close connection between the soft elastic piece 14 and the brush plate 12 is realized during the injection molding process. Furthermore, the soft elastic piece 14 is covered on the outer back surface 1202 and the outer peripheral surface 1203 of the brush plate 12, which increases the connection area between the soft elastic piece 14 and the brush plate 12, and enhances the connection stability between the soft elastic piece 14 and the brush plate 12. Specifically, the outer back surface 1202 of the brush plate 12 prevents the soft elastic piece 14 from peeling off in the direction close to the bristles 13, and the outer peripheral surface 1203 of the brush plate 12 prevents the soft elastic piece 14 from moving laterally and peeling off from the brush plate 12.

Furthermore, the bonding portion 124 is disposed on the outer peripheral surface 1203 of the brush plate 12, the bonding portion 124 comprises at least one of the first step structure 1241 and the ridge structure 1242, and the soft elastic piece 14 is covered on the bonding portion 124. In this way, not only is the soft elastic piece 14 prevented from being peeled off from the brush plate 12 in the thickness direction CC close to or away from the bristles 13, but also the soft elastic piece 14 is prevented from moving laterally away from the brush plate 12. Further, the connection stability between the soft elastic piece 14 and the brush plate 12 is enhanced. Even if the brush head 10 is in the humid environment for a long time, it can be ensured that the soft elastic piece 14 does not peel off from the brush plate 12.

In addition, the first cross sections of the brush plate 12 are perpendicular to the thickness direction CC of the brush plate 12, and the first cross sections are unchanged or gradually reduced from the bonding portion 124 to the bristle fixing surface 1201 of the brush plate 12 in the thickness direction CC. The second cross sections of the brush plate 12 are perpendicular to the thickness direction CC of the brush plate 12, and the second cross sections are unchanged or gradually reduced from the bonding portion 124 to the outer back surface of the brush plate 12 in the thickness direction CC. In this way, in the injection molding process of the brush plate 12, the certain plane where the bonding portion 124 is located is taken as the molding surface, the first mold (such as the upper mold) and the second mold (such as the lower mold) are closed at the molding surface to form the molding cavity. The injection liquid is injected into the molding cavity, and after the injection liquid solidifies, the brush plate 12 is formed. Afterwards, demolding is performed. Since the dimensions of the first cross sections are unchanged or gradually reduced, the first mold is smoothly removed. Similarly, since the dimensions of the second cross sections are unchanged or gradually reduced, the second mold is smoothly removed. Therefore, the brush plate 12 is taken out after removing the first mold and the second mold.

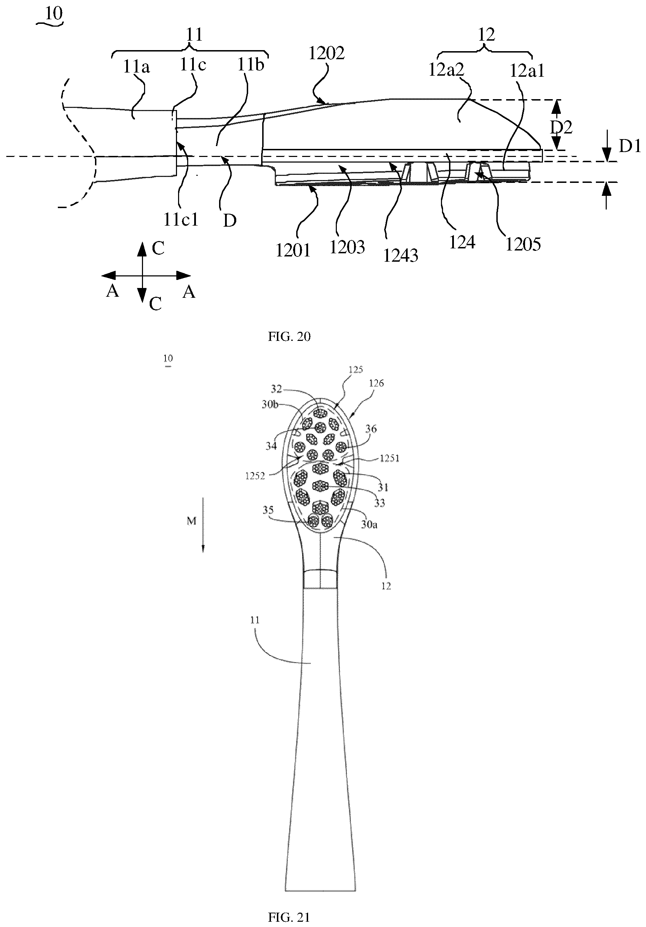

As shown in FIG. 20, in some embodiments, the brush plate 12 is divided into a first section 12a1 and a second section 12a2 in the thickness direction CC by the bonding portion 124. The first section 12a1 comprises the first cross sections, the second section 12a2 comprises the second cross sections, and each of the first cross sections is smaller than each of the second cross sections, so as to form the first step structure 1241 on the outer peripheral surface 1203 of the brush plate 12. The first step structure 1241 comprises a first step surface 1243, and the first step surface 1243 thereof is disposed toward the bristle fixing surface 1201 of the brush plate 12. In this way, when the soft elastic piece 14 moves backwards (i.e., moving away from the bristles 13), the soft elastic piece 14 is snapped on the first step surface 1243 of the first step structure 1241, and the soft elastic piece 14 is fastened on the brush plate 12, so that the soft elastic piece 14 is prevented from being peeled off from the brush plate 12 in the thickness direction away from the bristles 13.

As shown in FIGS. 19-20, in some embodiments, the bonding portion 124 is disposed around the outer peripheral surface 1203 of the brush plate 12. In this way, the soft elastic piece 14 is snapped on the bonding portion 124, which has a better connection effect and makes the soft elastic piece 14 less likely to peel off from the brush plate 12.

In some embodiments, the first section 12a1 comprises the bristle fixing surface 1201, the second section 12a2 comprises the outer back surface 1202, and the slots 1205 are defined on the outer peripheral surface 1203 of the brush plate 12.

In some embodiments, the slots1205 penetrate from the bristle fixing surface 1201 to the outer back surface 1202 of the brush plate 12. Due to an existence of the slots 1205, during the injection molding process of the soft elastic piece 14, the injection liquid fills the slots 1205 and form protrusions 1401. The protrusions 1401 are respectively embedded in the slots 1205 and connected to slot walls of the slots 1205. In this way, the connection area between the soft elastic piece 14 and the brush plate 12 is increased, and the connection stability between the soft elastic piece 14 and the brush plate 12 is enhanced.

It should be noted that when the slots 1205 penetrate from the bristle fixing surface 1201 to the outer back surface 1202 of the brush plate 12, it should not affect the demolding of the first mold and the second mold. Therefore, the cross sections of the slots 1205 perpendicular to the thickness direction CC are unchanged. Alternatively, the molding surface of the first mold and the second mold corresponds to a minimum cross section of each of the slots. That is, from the minimum cross section of each of the slots to the bristle fixing surface 1201 of the brush plate 12, the cross sections of each of the slots 1205 gradually increase. In this way, it is convenient for the first mold and the second mold to move away from each other for demolding without being hindered by the slots 1205.

In another embodiment, the slots 1205 are defined on the first section 12a1 and penetrate through the bristle fixing surface 1201 of the brush plate 12 in the thickness direction CC. For example, the slots 1205 defined on the first section 12a1 penetrate from the bonding portion 124 to the bristle fixing surface 1201 of the brush plate 12 in the thickness direction CC. From the bonding portion 124 to the bristle fixing surface 1201 of the brush plate 12 in the thickness direction CC, the cross sections of each of the slots 1205 gradually increase. That is, the slots 1205 are only defined on the first section 12a1, and the slots 1205 are blind slots (i.e., the slots do not penetrate through the outer back surface 1202 of the brush plate 12). It is understood that in the injection molding process of the brush plate 12, in order to form the slots 1205, the first mold needs to have convex portions corresponding to the slots 1205. Therefore, the cross sections of each of the slots 1205 gradually increases in the thickness direction close to the bristle fixing surface 1201 of the brush plate 12. In this way, the convex portions in the first mold are easily separated from the slots 1205 during demolding.

Due to the existence of the slots 1205, during the injection molding process of the soft elastic piece 14, the injection liquid fills the slots 1205 and form the protrusions 1401. The protrusions 1401 are respectively embedded in the slots 1205 and connected to the slot walls of the slots 1205. Since the cross sections of the slots 1205 gradually increase in the thickness direction close to the bristle fixing surface 1201 of the brush plate 12, the cross sections of the protrusions 1401 also gradually increase in the thickness direction close to the bristle fixing surface 1201 of the brush plate 12. In this way, when the soft elastic piece 14 moves away from the bristles 13, the protrusions 1401 are respectively engaged in the slots 1205, which further prevent the soft elastic piece 14 from peeling off from the brush plate 12 . It is understood that the slots 1205 may not penetrate through the bristle fixing surface 1201 of the brush plate 12 from the bonding portion 124 in the thickness direction CC, but may penetrate the bristle fixing surface 1201 of the brush plate 12 from any position between the bonding portion 124 and the bristle fixing surface 1201 of the brush plate 12 in the thickness direction CC, which also realizes above effects.

As shown in FIG. 20, in some embodiments, the brush rod 11 and the brush plate 12 are integrally formed by injection molding. The brush rod 11 has a middle cross section D perpendicular to the thickness direction CC, the bonding portion 124 comprises a maximum cross section perpendicular to the thickness direction CC. The maximum cross section of the bonding portion 124 is coplanar with the middle cross section D of the brush rod 11.

The brush rod 11 is roughly cylindrical. The brush rod 11 has a maximum cross section, which is the middle cross section D. Therefore, the maximum cross section of the brush rod 11 is coplanar with the maximum cross section of the brush plate 12. The maximum cross section of the brush rod 11 and the maximum cross section of the brush plate 12 are served as a molding surface of the brush rod 11 and the brush plate 12. In this way, the brush rod 11 and the brush plate 12 are integrally injection molded, and the demolding of the first mold and the second mold is facilitated.

As shown in FIG. 20, in some embodiments, the first section 12a1 has a first thickness D1 in the thickness direction CC, the second section 12a2 has a second thickness D2 in the thickness direction CC, and the first thickness D1 is less than the second thickness D2. Therefore, the bonding portion 124 is made closer to the bristle fixing surface 1201 relative to the outer back surface 1202 of the brush plate 12, the soft elastic piece14 covers more areas of the second section 12a2, the connection area of the soft elastic piece14 with the second section 12a2 is larger, and the second section 12a2 more effectively prevents the soft elastic piece14 from peeling off from the brush plate 12 in the thickness direction away from the bristles 13.

As shown in FIGS. 19-20, in some embodiments, the soft elastic piece 14 comprises a sleeving portion 143, and the sleeving portion 143 is annular and is sleeved on the brush rod 11. In this way, the soft elastic piece 14 is prevented from peeling off from the brush rod 11. If the soft elastic piece 14 is unable to peel off from the brush rod 11, it is more difficult for the soft elastic piece 14 to peel off from the brush plate 12. Therefore, the connection stability between the soft elastic piece 14 and the brush plate 12 is indirectly enhanced.

Furthermore, as shown in FIGS. 15 and 19, the sleeving portion 143 defines a sleeving hole 143a for the brush rod 11 to pass through. A diameter of the sleeving hole 143a is less than a width of the brush plate 12 in the width direction BB. Since the brush plate 12 blocks the sleeving portion 143, the sleeving portion 143 is unable to separate from the brush rod 11 in the length direction AA. Therefore, the connection stability between the soft elastic piece 14, the brush plate 12, and the brush rod 11 is further enhanced.

Furthermore, as shown in FIGS. 15 and 19, in some embodiments, the sleeving portion 143 is sleeved on a section of the brush rod 11 close to the brush plate 12 (that is, a second rod section 11b described below), and a length L1 of the sleeving portion 143 in the length direction AA is not greater than 20 mm, so that the brush rod 11 is partially exposed on the soft elastic piece 14. That is, the sleeving portion 143 does not completely wrap the brush rod 11, and the section of the brush rod 11 away from the brush plate 12 is not wrapped by the sleeving portion 143. Since friction between the soft elastic piece 14 and oral mucosa of the user is relatively large, if the sleeving portion 143 completely wraps the brush rod 11, after the brush head 10 is put into the oral cavity, except for the bristle fixing surface 1201 of the brush plate 12 where the bristles 13 are located, all other areas of the brush head 10 are in contact with the oral cavity through the soft elastic piece 14, which not only makes it difficult for the brush head 10 to move in the oral cavity, but also causes discomfort to the user. In the embodiment, the section of the brush rod 11 away from the brush plate 12 is not sleeved by the sleeving portion 143, which directly contacts the oral mucosa of the user, facilitates the movement of the brush head 10 in the oral cavity, and improves the comfort of the user during brushing.

As shown in FIG. 20, in some embodiments, the brush rod 11 comprises a first rod section 11a and the second rod section 11b. The first rod section 11a is connected to the brush plate 12 through the second rod section 11b. Cross sections of the first rod section 11a perpendicular to the length direction AA are greater than cross sections of the second rod section 11b perpendicular to the length direction AA (i.e., a diameter of the first rod section 11a is greater than a diameter of the second rod section 11b), so that a second step structure 11c is defined between the first rod section 11a and the second rod section 11b. The second step structure 11c comprises a second step surface 11c1 disposed towards the brush plate 12. The sleeving portion 143 is sleeved on the second rod section 11b and abuts against the second step surface 11c1 of the second step structure 11c. In this way, after the sleeving portion 143 wraps the second rod section 11b, the sleeving portion 143 is flush or nearly flush with a surface of the first rod section 11a, and an edge of the sleeving portion 143 close to the first rod section 11a does not protrude too much relative to the surface of the first rod section 11a, avoiding a problem that the edge of the sleeving portion 143 is tilted and sleeved on the first rod section 11a due to force (for example, the soft elastic piece 14 is subjected to oral force when the user brushes his or her teeth).

In some embodiments, based on the embodiment in which the brush rod 11 and the brush plate 12 are integrally formed, a maximum cross section, perpendicular to the thickness direction CC, of the second step structure 11c is coplanar with the middle cross section D. Namely, bounding by the middle cross section D, the second step structure 11c extends toward two sides away from the middle cross section D, and there is no snapping structure or obstacle that hinders the demolding of the first mold and the second mold, ensuring that the first mold and the second mold is demolded smoothly.

In some embodiments, based on the embodiment in which the soft elastic piece 14 and the brush plate 12 are integrally formed, bristle fixing holes (not shown in the FIGS. 19-20) are defined on the bristle fixing surface 121a of the brush plate 12, and the bristle fixing holes are blind holes. The brush head 10 also comprises copper sheets (not shown in the drawings), and the roots of the bristles 13 are installed in the bristle fixing holes through the copper sheets. Namely, the bristle fixing holes do not penetrate through the brush plate 12 in the thickness direction CC, and the bristles 13 are fixed on the brush plate 12 through a copper bristle fixing process. In this way, after the brush rod 11 and the brush plate 12 are integrally formed, the soft elastic piece 14 is directly disposed on the outer side of the brush plate 12 through injection molding, and then the roots of the bristles 13 are fixed in the bristle fixing holes through the copper sheets. A bristle fixing process thereof is reliable and simple.

If a copper-free bristle fixing process is adopted, when the brush plate 12 is formed, through holes needs to be formed together. When the bristles are fixed, the bristles 13 need to pass through the through holes and ironed on the outer back surface1202 of the brush plate 12. Specifically, one end of each of the bristles 13 is welded to the brush plate 12, which is complicate and has high cost.

In some embodiments, the soft elastic piece 14 covering the outer peripheral surface 1203 of the brush plate 12 does not exceed the bristle fixing surface 1201 of the brush plate 12. In this way, during the injection molding process of the soft elastic piece 14, the injecting liquid does not flow to the bristle fixing surface 1201 of the brush plate 12, which prevents the bristles 13 from bonding to each other if the injecting liquid flows to the bristle fixing surface 1201, thus preventing a reduction in the elasticity and freedom of the bristles 13.

Further, in the thickness direction CC, a distance between an edge of the soft elastic piece 14 at the outer peripheral surface 1203 of the brush plate 12 and the bonding portion 124 is not greater than 3 mm. In this way, the distance between the edge of the soft elastic piece 14 at the outer peripheral surface 1203 of the brush plate 12 and the bonding portion 124 is relatively small, and the bonding portion 124 has a stronger binding force on the edge of the soft elastic piece 14. If the distance between the edge of the soft elastic piece 14 at the outer peripheral surface 1203 of the brush plate 12 and the bonding portion 124 is greater than 3 mm, it indicates that the distance between the edge of the soft elastic piece 14 at the outer peripheral surface 1203 of the brush plate 12 and the bonding portion 124 is too large, and the bonding portion 124 has small binding force on the edge of the soft elastic piece 14, which increases a risk that the soft elastic piece 14 peels off from the brush plate 12.

The above content introduces the structural form of the brush head 10 that protect the oral cavity during use and has a strong structure from two aspects. In addition, the present disclosure further improves the structure of the bristles to improve the oral cleaning effect.

In order to improve the cleaning ability of the brush head 10, as shown in FIGS. 21-22, another embodiment of the present disclosure provides a brush head 10. The brush head 10 comprises a brush rod 11, a brush plate 12, and bristles 30. The brush rod 11 extends in a length direction M. The brush plate 12 is connected to one end of the brush rod 11 in the length direction M. The brush plate 12 has a bristle fixing surface 125 and the bristles 30. A first end of each of the bristles 30 is connected to the brush plate 12, and a second end of each of the bristles 30 extends in a direction away from the bristle fixing surface 125 of the brush plate 12. The bristles 13 comprise friction increasing clusters 31. A surface roughness of the friction increasing clusters 31 is greater than a surface roughness of other bristles 30, so that a friction coefficient between the friction increasing clusters 31 and an object to be brushed (i.e., the teeth) is greater than a friction coefficient between the other bristles 30 except the friction increasing clusters 31 and the object to be brushed.

A specific structure of the brush head 10 is described below in conjunction with FIGS. 21-26.

As shown in FIGS. 21-22, the brush head 10 comprises the brush rod 11, the brush plate 12, and bristles 30.

The brush rod 11 is a component of the brush head 10 that is configured to support the brush plate 12. A designer can reasonably select preparation material of the brush rod 11 according to actual needs, which is not specifically limited thereto.

The brush rod 11 extends in the length direction M. For instance, the brush rod 11 is a straight rod, in which a central axis thereof coincides with the length direction M. Alternatively, the brush rod 11 is a curved rod, in which a line between two endpoints, away from each other, of the brush rods 11 coincides with the length direction M.

The brush plate 12 is a component of the brush head 10 that is configured to carry the bristles 30. A specific shape of the brush plate 12 is not limited therein. The designer can reasonably design the shape of the brush plate 12 according to actual needs. For instance, a shape of the brush plate 12 may be, but is not limited to, rectangular, circular, oval, etc. Of course, the specific preparation material of the brush plate 12 is not limited thereto, and the designer can reasonably select the preparation material of the brush plate 12 according to actual needs.

The brush plate 12 is connected to one end of the brush rod 11 in the length direction M. That is, the brush plate 12 is connected to the brush rod 11. Further, the brush plate 12 extends in a direction parallel to the length direction M and away from the brush rod 11.

The brush plate 12 has a bristle fixing surface 125. The bristle fixing surface 125 of the brush plate 12 is a flat surface, a curved surface, or a combination of the flat surface and the curved surface.

The bristles 30 are components of the brush head 10 that are configured to clean the object to be brushed. Specific material for the bristles 30 is not limited thereto. The designer can reasonably select the material for the bristles 30 according to actual needs. For instance, the material for preparing the bristles 30 may comprise, but is not limited to, one or more of polyamide nylon (PA) and polyethylene terephthalate (PBT).

The first end of each of the bristles 30 is connected to the brush plate 12, and the second end of each of the bristles 30 extends in the direction away from the bristle fixing surface 125 of the brush plate 12.

The bristles 30 comprise the friction increasing clusters 31, and the friction increasing clusters 31 comprise different brush wires 311, or the friction increasing clusters 31 comprise brush wires 311 having the same structures. For instance, the friction increasing clusters 31 comprise different brush wires of different materials, or friction increasing clusters 31 comprise mixing brush wires with different single surface roughness of the same material. An included angle between an extension direction of at least part of the friction increasing clusters 31 and the bristle fixing surface 125 of the brush plate 12 is an acute angle or an obtuse angle. That is, the at least part of the friction increasing clusters 31 is inclined relative to the bristle fixing surface 125 of the brush plate 12, so that a free end 3131 of the at least part of the friction increasing clusters 31 (will be described in details below) is inclined towards the brush rod 11 relative to roots of the friction increasing clusters 31, making the friction increasing clusters 31 expand outwards and increasing a contact area between the friction increasing clusters 31 and the teeth of the user, which improves overall cleaning capability of the brush head 10. For instance, the included angle between the extension direction of the at least part of the friction increasing clusters 31 and the bristle fixing surface 125 of the brush plate 12 is 85 degrees or 95 degrees. Alternatively, the included angle between the extension direction of the at least part of the friction increasing clusters 31 and the bristle fixing surface 125 of the brush plate 12 is a right angle. That is, the included angle between the at least part of the friction increasing clusters 31 and the bristle fixing surface 125 of the brush plate is 90 degrees. It should be noted that when at least part of the bristle fixing surface 125 of the brush plate 12 is the curved surface, it is understood that the curved surface is formed by connecting a plurality of small flat surfaces together, and each of the brush wires in the at least part of the friction increasing clusters 31 is inclined relative to a corresponding small flat surface in the curved surface, so that the at least part of the friction increasing clusters 31 is inclined relative to the bristle fixing surface 125 of the brush plate 12.

The friction coefficient between the friction increasing clusters 31 and the object to be brushed is greater than the friction coefficient between the other bristles 30 except the friction increasing clusters 31 and the object to be brushed.

Based on the brush head 10 in the embodiments of the present disclosure, by providing the friction increasing clusters 31 and defining the friction coefficient between the friction increasing clusters 31 and the object to be brushed being greater than the friction coefficient between the other bristles 30 and the object to be brushed, when the user brushes his or her teeth during the brushing process, the friction force between the friction increasing clusters 31 and the teeth of the user is relatively large, so that the teeth of the user are sufficiently brushed by the bristles 30, thereby improving the overall cleaning capability of the brush head 10.

It is understood that application scenarios of the brush head 10 are different according to different specific expression forms of the object to be brushed. For example, when the object to be brushed is tableware, the brush head 10 is a brush head 10 applied to a dish washing brush; when the object to be brushed is the teeth of the user, the brush head 10 is a brush head 10 applied to a toothbrush; and when the object to be brushed is a toilet, the brush head 10 is a brush head 10 applied to a toilet brush. For convenience of description, the following takes the teeth of the user as the object to be brushed and the brush head 10 applied to the toothbrush as an example.

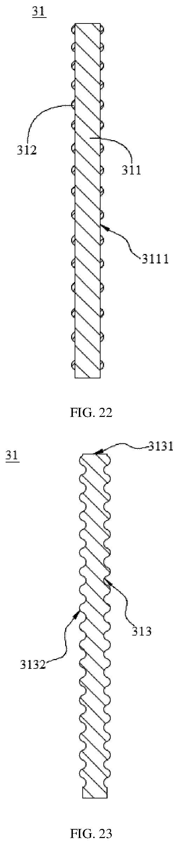

As shown in FIG. 22, when the user brushes teeth, due to many factors, such as a holding posture of the toothbrush of the user or a shape of the teeth of the user, bristles 30 close to a front end of the brush head 10 (one end of the brush plate 12 away from the brush rod 11) contact the teeth of the user first, and the bristles 30 close to a back end of the brush head 10 (one end of the brush plate 12 close to the brush rod 11) contact the teeth of the user later. Moreover, during the brushing process, due to a limitation of a brushing posture, the bristles 30 close to the back end of the brush head 10 are lifted relative to the teeth of the user. As a result, the bristles 30 close to the back end of the brush head 10 are not effectively in contact with the teeth of the user, and the friction force between the bristles 30 close to the back end of the brush head 10 and the teeth of the user is small, resulting in a poor cleaning capacity of the brush head 10. In order to improve the overall cleaning capacity of the brush head 10, in some embodiments, the bristle fixing surface 125 of the brush plate 12 comprises a first area 1251 and a second area 1252. The first area 1251and the second area 1252 are located in the length direction M. The first area 1251 is closer to the brush rod 11 than the second area 1252. The bristles 30 comprise a first bristle group 30a disposed in the first area 1251 and a second bristle group 30b disposed in the second area 1252. The first bristle group 30a at least comprises the friction increasing clusters 31. The first bristle group 30a at least comprises the friction increasing clusters 31, which increase the friction coefficient between the first bristle group 30a located at the back end of the brush head 10 and the teeth of the user. Therefore, the friction force between the first bristle group 30a and the teeth of the user is increased, which improves the overall cleaning capacity of the brush head 10 when the user brushed teeth.

As shown in FIGS. 23-26, considering that the friction coefficient between the friction increasing clusters 31 and the teeth of the user is greater than the friction coefficient between other bristles 30 except the friction increasing clusters 31 and the teeth of the user, in order to make the friction increasing clusters 31 have a larger friction coefficient with the teeth of the user, specific structures of the friction increasing clusters 31 comprise but are not limited to following embodiments.

As shown in FIG. 23, in a first embodiment of the friction increasing clusters 31, the friction increasing clusters 31 comprise brush wires 311 and friction structures 312. One or more of the friction structures 312 are disposed on an outer surface 3111 of each of the brush wires 311. Each of the friction structures 312 protrudes from the outer surface 3111 of a corresponding brush wire 311. Each of the friction structures 312 is a bulge disposed on the outer surface 3111 of the corresponding brush wire 311. A specific shape of each of the friction structures 312 is not limited thereto. For example, each of the friction structures 312 is a hemispherical bulge or an annular bulge surrounding the corresponding brush wire 311 in an axial direction of the corresponding brush wire 311. By providing the one or more of friction structures 312 on the outer surface 3111 of each of the brush wires 311, a roughness of the outer surface 3111 of the each of the brush wires 311 is increased, thereby increasing the friction coefficient between the friction increasing clusters 31 and the teeth of the user.

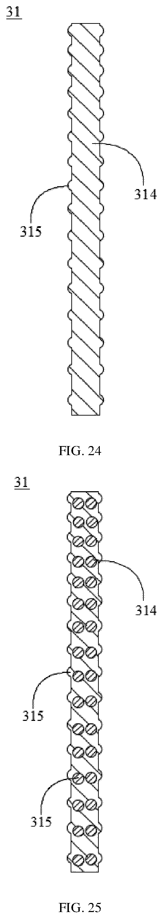

As shown in FIG. 24, in a second embodiment of the friction increasing clusters 31, an outer surface 313 of each of the friction increasing clusters 31 is configured to be uneven to increase a friction coefficient between the outer surface 313 of each of the friction increasing clusters 31 and the object to be brushed. The outer surface 313 of each of the friction increasing clusters 31 is formed into an uneven shape by splicing sub-flat surfaces together, by splicing sub-curved surfaces together, or by splicing the sub-flat surfaces and the sub-curved surfaces together to form the uneven shape. In the design, by designing the outer surface 313 of each of the friction increasing clusters 31 to be uneven, a roughness of the outer surface 313 of each of the friction increasing clusters 31 is increased, thereby increasing the friction coefficient between the friction increasing clusters 31 and the teeth of the user.

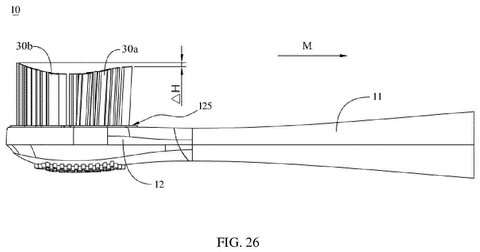

As shown in FIGS. 25 and 26, in a third embodiment of the friction increasing clusters 31, the friction increasing clusters 31 comprise main bodies 314 and friction increasing particles 315. Each of the main bodies 314 and corresponding friction increasing particles 315 are integrally formed. A friction coefficient between the friction increasing particles 315 and the object to be brushed is greater than a friction coefficient between the main bodies 314 and the object to be brushed, so as to increase the friction coefficient between the friction increasing clusters and the object to be brushed. The main bodies 314 and the friction increasing particles 315 are formed into an integrated structure by 3D printing or injection molding. The friction increasing particles 315 comprise, but are not limited to, calcium carbonate particles. In the design, the main bodies 314 and the friction increasing particles 315 are designed to be integrally formed, thereby increasing the roughness of the friction increasing clusters 31 and increasing the friction coefficient between the friction increasing clusters 31 and the teeth of the user.

As shown in FIGS. 21, 22, and 24, each of the friction increasing clusters 31 comprises a free end 3131 and a side wall surface 3132. The free end 3131 of each of the friction increasing clusters 31 is away from the bristle fixing surface 125 of the brush plate 12. The side wall surface 3132 of each of the friction increasing clusters 31 is located between the free end 3131 of each of the friction increasing clusters 31 and the bristle fixing surface 125 of the brush plate 12.

Considering that during the process of brushing teeth, due to the different magnitudes and directions of the forces applied by the user to the electric toothbrush, and the deformation of the bristles 30 when subjected to the force, different parts of the friction increasing clusters 31 may contact the teeth of the user. For example, one end of each of the friction increasing clusters 31 away from the bristle fixing surface 125 of the brush plate 12 may contact the teeth of the user, or the side wall surface 3132 of each of the friction increasing clusters 31 may contact the teeth of the user after the friction increasing clusters 31 are deformed. The relationships of a friction coefficient between the free end 3131 of each of the friction increasing clusters 31 and the teeth of the user, a friction coefficient between the side wall surface 3132 of each of the friction increasing clusters 31 and the teeth of the user, and a friction coefficient between other bristles 30 except the friction increasing clusters 31 and the teeth of the user may comprises one or more of the following embodiments.

In a first embodiment, the friction coefficient between the free end 3131 of each of the friction increasing clusters 31 and the object to be brushed is greater than the friction coefficient between the other bristles except the friction increasing clusters 31 and the object to be brushed. In the embodiment, by configuring the friction coefficient between the free end 3131 of each of the friction increasing clusters 31 and the object to be brushed being greater than the friction coefficient between the other bristles except the friction increasing clusters 31 and the object to be brushed, when the force applied by the user on the electric toothbrush is relatively small, the free end 3131 of each of the friction increasing clusters 31 is ensured to be in direct and effective contact with the teeth of the user, thereby further improving overall cleaning ability of the brush head 10.

In a second embodiment, the friction coefficient between the side wall surface 3132 of each of the friction increasing clusters 31 and the object to be brushed is greater than the friction coefficient between the other bristles except the friction increasing clusters 31 and the object to be brushed. In the embodiment, by configuring the friction coefficient between the side wall surface 3132 of each of the friction increasing clusters 31 and the object to be brushed being greater than the friction coefficient between the other bristles except the friction increasing clusters 31 and the object to be brushed, when the force applied by the user on the electric toothbrush is relatively large, the side wall surface 3132 of each of the friction increasing clusters 31 effectively contact the teeth of the user after the friction increasing clusters 31 are deformed, thereby further improving the overall cleaning ability of the brush head 10.

As shown in FIG. 22, considering that the bristles 30 may be worn after frequent contact with the teeth of the user, resulting in a decrease in the cleaning ability of the bristles 30, in order to enable the user to more intuitively know a wear degree of the bristles 30 so as to facilitate the user to replace the brush head 10, the bristles 30 are designed to comprises color indicating clusters 32. The user is able to know the wear degree of the bristles 30 according to change of a color of the color indicating clusters 32. The color of the color indicating clusters is at least different from a color of the friction increasing clusters 31. Factors causing a color change of the color indicating clusters 32 may be, but are not limited to, one or more of the following embodiments.

In a first embodiment, the color of the color indicating clusters 32 changes with increase of use count of the color indicating clusters 32. For instance, as the use count of the color indicating clusters 32 increases, the color of the color indicating clusters 32 gradually turns lighter, or the color indicating clusters 32 directly changes from one color to another. In the embodiment, the user is able to intuitively judge the wear degree of the bristles 30 by observing the color change of the color indicating clusters 32, so that the user is able to replace the brush head 10 in time.

In a second embodiment, the color of the color indicating clusters 32 changes with increase of use time of the color indicating clusters 32. For instance, as the use time of the color indicating clusters 32 increases, the color of the color indicating clusters 32 gradually turns lighter, or the color indicating clusters 32 directly changes from one color to another. In the embodiment, the user is able to intuitively judge the wear degree of the bristles 30 by observing the color change of the color indicating clusters 32, so that the user is able to replace the brush head 10 in time.

As shown in FIG. 22, the color indicating clusters 32 are designed to facilitate the user to visually judge the wear degree of the bristles 30 by observing the color change of the color indicating clusters 32, so as to facilitate the user to replace the brush head 10 in time, and the friction coefficient between the color indicating clusters 32 and the teeth of the user is less than the friction coefficient between the friction increasing clusters 31 and the teeth of the user. In order to further improve the overall cleaning ability of the brush head 10, in some embodiments, an area occupied by the friction increasing clusters 31 on the bristle fixing surface 125 of the brush plate 12 is greater than an area occupied by the color indicating clusters 32 on the bristle fixing surface 125 of the brush plate 12. By such design, the more the friction increasing clusters 31, the greater the friction between the bristles 30 and the teeth of the user during the brushing process of the user and the stronger the cleaning ability of the brush head 10.

As shown in FIG. 22 and FIG. 26 , it is understood that the bristles 30 comprises free ends 3131, and the free ends of the bristles 30 away from the brush plate 12 may be located in a same plane. That is, a height of each of the brush wires 311 in the bristles 30 is the same. Considering that the teeth of the user are disposed in an arch shape, in order to make the bristles 30 fit the teeth of the user better during the brushing process, the bristles 30 are designed to comprise a first bristle group 30a and a second bristle group 30b. The first bristle group 30a is closer to the brush rod 11 than the second bristle group 30b. Height designs of the first bristle group 30a and the second bristle group 30b may include but is not limited to one or more of the following embodiments.

In a first embodiment, in a direction from the brush rod 11 to the brush plate 12, a height of the first bristle group 30a gradually decreases and a height of the second bristle group 30b gradually increases. That is, the first bristle group 30a gradually decreases in a direction approaching the second bristle group 30b, and the second bristle group 30b gradually increases in a direction away from the first bristle group 30a. In other words, from the direction from the brush rod 11 to the brush plate 12, a distance between the free ends 3131 of the first bristle group 30a and the bristle fixing surface 125 of the brush plate 12 gradually decreases, and a distance between the free ends 3131 of the second bristle group 30b and the bristle fixing surface 125 of the brush plate 12 gradually increases. In the design, the height of the first bristle group 30a and the height of the second bristle group 30b are designed to be disposed in the above manner, so that the bristles 30 fit the teeth of the user better, improving a fit degree between the bristles 30 and the teeth of the user during the brushing process, and further improving the cleaning ability of the brush head 10.

In a second embodiment, a height of a first end of the first bristle group 30a close to the second bristle group 30b is equal to a height of a first end of the second bristle group 30b close to the first bristle group 30a with respect to the bristle fixing surface 125 of the brush plate 12. That is, the first bristle group 30a and the second bristle group 30b are smoothly transitioned. In the design, the height of the first bristle group 30a and the height of the second bristle group 30b are designed in the above manner, so that the bristles 30 fit the teeth of the user better, improving the fit degree between the bristles 30 and the teeth of the user during the brushing process, and further improving the cleaning ability of the brush head 10.

In a third embodiment, in a direction perpendicular to the bristle fixing surface 125 of the brush plate 12, the height of the first bristle group 30a is less than the height of the second bristle group 30b. In the design, the height of the first bristle group 30a and the height of the second bristle group 30b are designed in the above manner, so that the bristles 30 fit the teeth of the user better, improving the fit degree between the bristles 30 and the teeth of the user during the brushing process, and further improving the cleaning ability of the brush head 10.

Specifically, with respect to the bristle fixing surface 125 of the brush plate 12, a height difference △H (as shown in FIG. 26) between a second end of the second bristle group 30b away from the first bristle group 30a and a second end of the first bristle group 30a away from the second bristle group 30b is not less than 1 mm and not greater than 4 mm. For example, the height difference △H may be, but is not limited to 1 mm, 2 mm, 3 mm, 4 mm, etc. In the design, the height difference △H is reasonably designed, so that the bristles 30 fit the teeth of the user better, improving the fit degree between the bristles 30 and the teeth of the user during the brushing process, and further improving the cleaning ability of the brush head 10.

If the height difference △H is less than 1 mm, an overall height change of the bristles 30 is relatively gentle. Therefore, during the brushing process, it is easy to occur that the bristles 30 located in a middle of the brush plate 12 contact the teeth of the user, while the bristles 30 located at two ends of the brush plate 12 do not contact the teeth of the user. That is, some of the bristles 30 are unable to play an effective cleaning effect, such that the teeth of the user are unable to be effectively cleaned. If the height difference △H is greater than 4 mm, the overall height change of the bristles 30 is relatively large. Therefore, during the brushing process, it is easy to occur that the bristles 30 located at two ends of the brush plate 12 contact the teeth of the user, while the bristles 30 located in the middle of the brush plate 12 do not contact the teeth of the user. That is, some of the bristles 30 are unable to play an effective cleaning effect, such that the teeth of the user are unable to be effectively cleaned.

As shown in FIG. 22, in order to reduce an occurrence of oral diseases such as dental caries, the bristles 30 further comprise a first fluorine-containing cluster 33 and a second fluorine-containing cluster 34. Fluorine-containing clusters refer to the bristles 30 made of materials containing fluorine ions. Arrangements of the first fluorine-containing cluster 33 and the friction-increasing clusters 31 and arrangements of the second fluorine-containing cluster 34 and the color-indicating clusters 32 may comprise, but are not limited to, one or more of the following embodiments.

In a first embodiment, the friction increasing clusters 31 are disposed around the first fluorine-containing cluster 33. The friction clusters 31 are disposed around the first fluorine-containing cluster 33 in one or more circles with the first fluorine-containing cluster 33 as a center. In the design, the occurrence of oral diseases such as caries is effectively reduced by providing the first fluorine-containing cluster 33.

In a second embodiment, the color-indicating clusters 32 are disposed around the second fluorine-containing cluster 34. The color-indicating clusters 32 are disposed around the second fluorine-containing cluster 34 in one or more circles with the second fluorine-containing cluster 34 as a center. In the design, the occurrence of oral diseases such as caries is effectively reduced by providing the second fluorine-containing cluster 34.

It should be noted that when the friction increasing clusters 31 are disposed around the first fluorine-containing cluster 33, and the color indicating clusters 32 are disposed around the second fluorine-containing cluster 34, so an overall arrangement of the bristles 30 on the brush plate 12 presents a double-ring structure. At this time, the first fluorine-containing cluster 33 and the friction-increasing clusters 31 disposed around the first fluorine-containing cluster 33 are equivalent to a first one of ring structures in the double-ring structure, and the second fluorine-containing cluster 34 and the color indicating clusters 32 disposed around the second fluorine-containing cluster 34 are equivalent to a second one of the ring structures in the double-ring structure.

As shown in FIGS. 21 and 22, considering that the first bristle group 30a is closer to the brush rod 11 than the second bristle group 30b; so the first bristle group 30a comprises the friction increasing clusters 31 and the first fluorine-containing cluster 33, and the second bristle group 30b comprises the color indicating clusters 32 and the second fluorine-containing cluster 34. In order to make the fluoride ions more evenly distributed, the first bristle group 30a further comprises third fluorine-containing clusters 35, and/or the second bristle group 30b further comprises fourth fluorine-containing clusters 36, The relative arrangement between the third fluorine-containing clusters 35, the friction increasing clusters 31, and the first fluorine containing cluster 33, and the relative arrangement between the fourth fluorine containing clusters 36, the color indicating clusters 32, and the second fluorine-containing cluster 34 may comprise but are not limited to one or more of the following embodiments.

In the first embodiment, at least part of third fluorine-containing clusters 35 is disposed on one side of the friction increasing clusters 31 away from the color indicating clusters 32. In the design, by providing the third fluorine-containing clusters 35, the fluorine ions are distributed more evenly, which further effectively reduces the occurrence of oral diseases such as caries.

In a second embodiment, at least part of the fourth fluorine-containing clusters 36 is disposed between the color indicating clusters 32 and the friction increasing clusters 31. In the design, by providing the fourth fluorine-containing clusters 36, the fluorine ions are distributed more evenly, which further effectively reduces the occurrence of oral diseases such as caries.

It should be noted that the color change of the color indicating clusters 32 is configured to indicate the wear degree of the electric toothbrush. Since the second bristle group 30b is disposed farther away from the brush rod 11 than the first bristle group 30a, a contact frequency of the second bristle group 30b on the teeth of the user is greater than that of the first bristle group 30a, so the wear degree of the second bristle group 30b is more serious than the wear degree of the first bristle group 30a. For example, there is a situation where the second bristle group 30b is severely worn and the cleaning ability of the second bristle group 30b is reduced, while the first bristle group 30a is less worn and the first bristle group 30a still has a good cleaning ability. By setting the color indicating clusters 32 in the second bristle group 30b, indication accuracy of the color indicating clusters 32 is further improved.

When the first bristle group 30a comprises the friction increasing clusters 31 and the first fluorine-containing cluster 33 and the second bristle group 30b comprises the color indicating clusters 32 and the second fluorine-containing cluster 34, in some embodiments, the color of the friction increasing clusters 31, the color of the color indicating clusters 32, and a color of the first fluorine-containing cluster 33 are different from each other, and the color of the first fluorine-containing cluster 33 is same as a color of the second fluorine-containing cluster 34. For instance, the color of the color indicating clusters 32 may be blue, the color of the friction increasing cluster 31 may be purple, and the color of the first fluorine-containing cluster 33 and the color of the second fluorine-containing cluster 34 may be white. In the embodiment, by designing the color of the first fluorine-containing cluster 33 and the color of the second fluorine-containing cluster 34 to be different from the color of the friction increasing cluster 31 and the color of the color indicating cluster 32, after the color of the color indicating clusters 32 changes, the color indicating clusters 32 form a more distinct contrast with the friction increasing clusters 31, the first fluorine-containing cluster 33, and the second fluorine-containing cluster 34 in terms of visual impact on the user. Of course, in other embodiments, the color of the color indicating clusters 32 may be same as the color of other clusters (such as the first fluorine-containing cluster 33, the second fluorine-containing cluster 34, and the friction increasing clusters 31). Since the free ends of the color indicating clusters 32 contact the teeth of the user more frequently than roots of the color indicating clusters 32, the free ends of the color indicating clusters 32 fades more seriously. At this time, the color of the color indicating clusters 32 gradually becomes lighter from the roots thereof to the free ends thereof to provide an indication to the user.

As shown in FIG. 21, considering that the brush plate 12 is configured to support the bristles 30, the brush plate 12 generates an interaction force with the teeth of the user through the bristles 30 during the brushing process of the user. In order to further improve the overall cleaning ability of the brush head 10, in some embodiments, at least part of the brush plate 12 is elastic. For instance, a connection portion between the brush plate 12 and the brush rod 11 is elastic. By such design, during the brushing process of the user, the bristles 30 contact the teeth of the user and are under the interaction force, and the bristles 30 transmit the interaction force to the brush plate 12 to cause the brush plate 12 to produce elastic deformation, and the farther a portion of the brush plate 12 from the brush rod 11, the greater a deformation amplitude is, so that the first bristle group 30a disposed close to the brush rod 11 is close to the user's teeth, which increases a contact area between the first bristle group 30a and the teeth of the user, thereby further improving the overall cleaning ability of the brush head 10.

Furthermore, it is understood that when the user cleans molars located on an inner side of the oral cavity, the brush plate 12 needs to be extended into the inner side of the oral cavity to reduce the discomfort of the user during the brushing process and to improve comfort of the user during the brushing process. Therefore, in some embodiments, the bristle fixing surface 125 of the brush plate 12 has two edge lines 126 symmetrically disposed with respect to the length direction M. The two edge lines 126 are arc-shaped, and from one side of the two edge lines 126 close to the brush rod 11 to one side of the two edge lines 126 away from the brush rod 11, a distance between each of the two edge lines 126 and the length direction increases first and then decreases. In the design, the brush plate 12 is constructed to have a larger width in the middle and a smaller width at two ends, which effectively reduces the discomfort of the user during the brushing process. In addition, since the brush plate 12 is able to produce elastic deformation, the widths of two ends of the brush plate 12 are designed to be smaller, which reduces a deformation resistance of the brush plate 12 and makes the brush plate 12 more easily deformable, thereby making the first bristle group 30a more easily contact the teeth of the user.

In other embodiments, in order to improve the cleaning ability of the brush head 10, the structure of the brush head 10 of the present disclosure may also adopt following scheme.

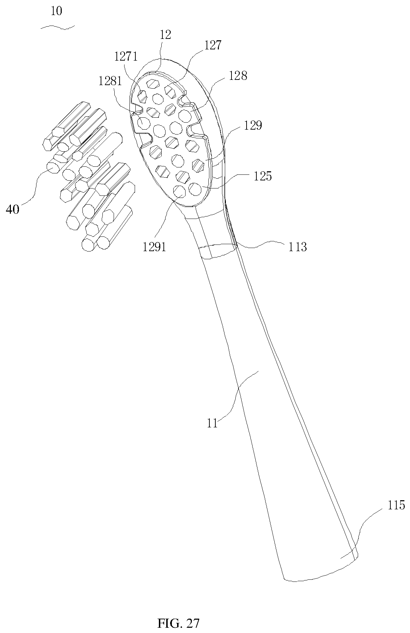

As shown in FIGS. 27-32, the brush head 10 comprises a brush rod 11, a brush plate 12, and bristles 40. The brush plate 12 support the bristles 40, and the bristles 40 are configured to clean teeth. When brushing the teeth, the brush plate 12 and the bristles 40 constitute a head of the brush head 10 and extend into an oral cavity of a user. The bristles 40 are fixed to the brush plate 12. The bristles 40 comprise a first brush wire group 41, a second brush wire group 42, and a third brush wire group 43. The first brush wire group 41, the second brush wire group 42, and the third brush wire group 43 are sequentially distributed in a length direction X. Correspondingly, the brush plate 12 comprises a first area 127, a second area 128, and a third area 129 sequentially disposed in the length direction X. The first brush wire group 41 is disposed in the first area 127, the second brush wire group 42 is disposed in the second area 128 , and the third brush wire group 43 is disposed in the third area 129.

Brush wires of the first brush wire group, brush wires of the second brush wire group, and brush wires of the third brush wire group are fixed to the brush plate and extend out of the bristle fixing surface of the brush plate in the thickness direction.

The first brush wire group 41 is composed of brush wires (not shown in the drawings), roots of the brush wires thereof are fixed in the first area 127, and the brush wires of the first brush wire group 41 extend upward from the brush plate 12 in a thickness direction Z. A length of each of the brush wires, extending upward from the brush plate 12, of the first brush wire group 41 is a height of each of the brush wires thereof, and a height of the first brush wire group 41 is defined by a height of the brush wires thereof. Tips of the brush wires of the first brush wire group 41 define a first brush surface 411.

The second brush wire group 42 is composed of brush wires (not shown in the drawings), roots of the brush wires thereof are fixed in the second area 128, and the brush wires of the second brush wire group 42 extend upward from the brush plate 12 in the thickness direction Z. A length of each of the brush wires, extending upward from the brush plate 12, of the second brush wire group 42 is a height of each of the brush wires thereof, and a height of the second brush wire group 42 is defined by a height of the brush wires thereof. Tips of the brush wires of the second brush wire group 42 define a second brush surface 421.

The third brush wire group 43 is composed of brush wires (not shown in the drawings), roots of the brush wires thereof are fixed in the third area 129, and the brush wires of the third brush wire group 43 extend upward from the brush plate 12 in the thickness direction Z. A length of each of the brush wires, extending upward from the brush plate 12, of the third brush wire group 43 is a height of each of the brush wires thereof, and a height of the third brush wire group 43 is defined by a height of the brush wires thereof. Tips of the brush wires of the third brush wire group 43 define a third brush surface 431.

In the length direction X, the height of the first brush wire group 41 gradually increases, the height of the second brush wire group 42 gradually decreases, and the height of the third brush wire group 43 gradually increases. The second brush surface 421 and the third brush surface 431 form a concave curved surface 44, and a transmission portion of the second brush surface 421 and the first brush surface 411 form a convex curved surface 45 arched away from the brush plate 12. The highest point of the convex curved surface 45 is a sharp portion 451, which is allowed to extend into a tooth gap. The sharp portion 451 is formed at a transition portion of the first brush wire group 41 and the second brush wire group 42.

Each of brush wire groups of the bristles 40 has a length in the length direction X, a height in the thickness direction Z and a width in the width direction Y. The length direction X, the thickness direction Z and the width direction Y are perpendicular to each other. The height of each of the brush wire groups of the bristles 40 is the length of each of the brush wire groups extending upward from the brush plate 12 in the thickness direction Z, which is equivalent to a distance between the tips of the brush wires thereof and the brush plate 12 in the thickness direction Z, and is also equivalent to a distance between a corresponding brush surface and the brush plate 12 in the thickness direction Z.

The height of the first brush wire group 41 gradually increases in the length direction X, the height of the second brush wire group 42 gradually decreases in the length direction X, and the height of the third brush wire group 43 gradually increases in the length direction X, so the sharp portion 451 is formed at a transition portion of the first brush surface 411 and the second brush surface 421, and the sharp portion 451 is capable of extending into the tooth gap between adjacent teeth. The second brush surface 421 and the third brush surface 431 form the concave curved surface 44, the transition portion of the second brush surface 421 and the first brush surface 411 forms the convex curved surface 45 defining the sharp portion 451 with the first brush surface 411, so that the sharp portion 451 is capable of extending into the tooth gap while being relatively gentle and not easy to poke the gums. At the same time, when brushing the teeth, since the bristles 40 are deformable, the brush wires of the first brush wire group 41 that are relatively higher and being extended into the tooth gap are prone to deformation. If the brush wires lack support, permanent deformation is likely to occur. Therefore, part of the brush wires of the first brush wire group 41 with lower height plays a supporting role to prevent the brush wires, having the higher height, of the first brush wire group 41 from causing permanent deformation. Moreover, when brushing the teeth, the first brush wire group 41 contacts tooth surfaces define the tooth gap, and the second brush wire group 42 and the third brush wire group 43 contact the tooth surfaces outside the tooth gap, so no matter what posture the user uses to adjust an brushing angle, the bristles 40 are able to always effectively contact the tooth surfaces of the teeth while extending into the tooth gap for cleaning.

The brush rod 11 extends in the length direction X, and has a proximal end 113 and a distal end 115. The proximal end 113 of the brush rod 11 is fixed to the brush plate 12, and the distal end 115 of the brush rod 11 is convenient for the user to hold or is assembled with other parts of the electric toothbrush. The proximal end 113 of the brush rod 11 and the distal end 115 of the brush rod 11 are respectively located at opposite ends of the brush rod 11 in the length direction X. The proximal end 113 of the brush rod 11 is adjacent to the third brush wire group 43 of the bristles 40. The brush rod 11 and the brush plate 12 are fixedly connected, and a connection method thereof may be, but is not limited to clamping, bonding, hot melt welding, threaded connection, or integrated molding.

In some embodiments, the first brush wire group 41 comprises first brush wire clusters 412. Each of the first brush wire clusters 412 is formed by the brush wires being bundled. The first brush wire clusters 412 are distributed in point shapes in the first area 127 of the brush plate 12. The second brush wire group 42 comprises second brush wire clusters 422. Each of the second brush wire clusters is formed by the brush wires being bundled. The second brush wire clusters 422 are distributed in point shapes in the second area 128 of the brush plate 12. The third brush wire group 43 comprises third brush wire clusters 432. Each of the third brush wire clusters 432 is formed by the brush wires being bundled. The third brush wire clusters 432 are distributed in point shapes in the third area 129 of the brush plate 12. Shape of cross sections of brush wire clusters parallel to the brush plate 12 may be, but are not limited to, circular, elliptical or polygonal. The shapes of the cross sections of the brush wire clusters may be set according to design and manufacturing requirements. For each of the brush wire groups, the cross sections of each of the brush wire clusters may be the same or different. For each of the brush wire groups, each of the brush wire clusters may be distributed in a curve, in a straight line, in an array, or in other distribution modes that meet the design and manufacturing requirements.

In a specific structure, each of the first brush wire clusters 412 is distributed in an arc shape. The second brush wire clusters 422 comprise second inner brush wire clusters 422a located on an inner side thereof and second outer brush wire clusters 422b located on an outer side thereof, the inner side thereof is one side away from the brush rod 11, and the outer side thereof is one side close to the brush rod 11. Each of the second inner brush wire clusters 422a is distributed in the arc shape, and each of the second outer brush wire cluster s422b is also distributed in the arc shape. Each of the third brush wire clusters 432 is distributed in a point shape on the brush plate 12.

The first area 127 of the brush plate 12 defines first grooves 1271 corresponding to the first brush wire clusters 412, and the roots of the brush wires are fixed in the first grooves 1271. The second area 128 of the brush plate 12 defines second groove s1281 corresponding to the second brush wire clusters 422, and the roots of the brush wires thereof are fixed in the second grooves 1281. The third area 129 of the brush plate 12 defines third grooves 1291 corresponding to the third brush wire clusters 432, and the roots of the brush wires are fixed in the third grooves 1291. Of course, in some alternative embodiments, a plurality of brush wire clusters may be fixed in one of grooves of the brush plate 12.

The brush plate 12 has a bristle fixing surface 125 facing the bristles 40. The first groove s1271, the second grooves 1281, and the third grooves 1291 are defined on the bristle fixing surface 125 of the brush plate 12. The heights of the brush wire groups is the length of the brush wires extending upward from the bristle fixing surface 125 of the brush plate 12 in the thickness direction Z.

In some embodiments, a maximum height of the third brush wire group 43 is less than a maximum height of the first brush wire group 41. Therefore, the brush wires of the third brush wire group 43 are shorter than the brush wires of the first brush wire group 41, and the contact between the third brush wire group 43 and the teeth does not hinder the sharp portion 451 from extending into the tooth gap.

In addition, especially for the third brush wire group 43, the maximum height of the third brush wire group 43 is less than the maximum height of the first brush wire group 41. Therefore, the higher brush wires of the third brush wire group 43 do not contact the teeth in certain postures and do not hinder the sharp portion 451 from extending into the tooth gap, thereby avoiding a small contact area between the bristles 40 and the teeth and affecting the brushing effect.

In some embodiments, a length of the first brush wire group 41 in the length direction is A, a length of the bristles in the length direction is B, and 1/10 ≤ A: B ≤ 1/3.

By such arrangement, the first brush wire group 41 is well supported, preventing the higher brush wires of the first brush wire group 41 from being permanently deformed. When the user brushes the teeth, the brush wires of the first brush wire group 41 contact the tooth surfaces, the brush wires of the first brush wire group 41 are easy to accidentally touch the gums. The first brush surface 411 of the first brush wire group 41 has a certain area. The first brush surface 411 has a large contact area with the gums, which disperses a pressure thereof and reduces the pain of stabbing the gums. By setting A:B≤1/3, on the one hand, it is necessary to provide a longer distance to arrange the second brush wire group 42 and the third brush wire group 43, since the second brush wire group 42 and the third brush wire group 43 are main parts of the brush head 10, and more brush wires are required. On the other hand, the longer length size provides a relatively smooth height change of the second brush wire group 42 and the third brush wire group 43, so that the brush wires of the second brush wire group 42 and the brush wires of the third brush wire group 43 are able to smoothly contact the tooth surfaces. By setting A:B≥1/10, the head of the brush head is prevented from being too large and causing a sense of discomfort in the oral cavity.

In some embodiments, in the length direction X, a height change rate of the first brush wire group is less than a height change rate of the second brush wire group. The first brush wire group 41 contacts inner teeth, and the second brush wire group 42 contacts outer teeth. The sharp portion 451 extends into the tooth gap. In fact, a portion of the outer teeth close to the tooth gap has a larger curvature change. Therefore, the bristles 40 adapt to the shape of the teeth and the tooth gap, fit the teeth better, and brush the teeth more comprehensively.

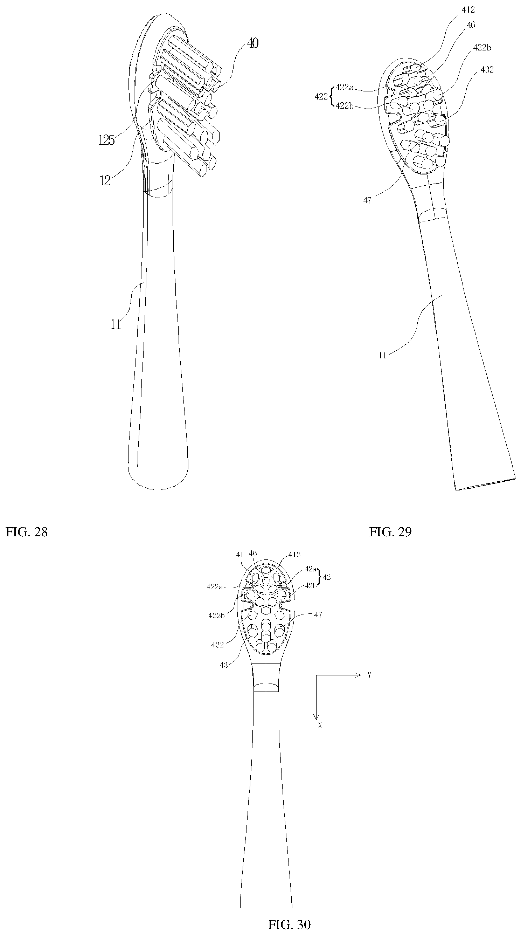

As shown in FIG. 30, in some embodiments, the length of the first brush wire group 41 in the length direction X is less than the length of the second brush wire group 42 in the length direction X. The second brush wire group 42 comprises a first distribution section 42a and a second distribution section 42b. In the length direction X, the first distribution section 42a is connected to the first brush wire group 41, and the second distribution section 42b is connected to the third brush wire group 43. In the length direction X, a height change rate of the first distribution section 42a is greater than the height change rate of the first brush group 41, and the height change rate of the first brush group 41 is greater than a height change rate of the second distribution section 42b. By such arrangement, the sharp portion 451 formed at the transition portion of the first brush wire group 41 and the second brush wire group 42 is smaller, and the height change of the first brush wire group 41 is relatively gentle, which is not easy to make the user feel stinging and ensures that the sharp portion 451 is allowed to extend into the tooth gap for cleaning. The second brush wire group 23 is relatively gentle to better contact with the teeth, and the length of the second brush wire group 23in the length direction X cannot be too short.

In some embodiments, a sum of an area of an orthographic projection of the first brush wire group 41 on the brush plate 12 and an area of an orthographic projection of the first distribution section 42a on the brush plate 12 is less than a sun of an area of an orthographic projection of the second distribution section 42b on the brush plate 12 and an area of an orthographic projection of the third brush wire group on the brush plate 12. Since the second brush wire group 42 and the third brush wire group 43 are the main parts for brushing, the above area relationship is set so that the main parts for brushing have a larger area. Specifically, an orthographic projection on the brush plate 12 is equivalent to an orthographic projection on the bristle fixing surface 125 of the brush plate 12.

In some embodiments, the length of the first brush wire group 41 in the length direction X is 2-6 mm. When the length of the first brush wire group 41 is less than 2 mm, the brush plate 12 is unable to well support the first brush wire group 41 during brushing, and the higher brush wires are easily permanently deformed. When the length of the first brush wire group 41 is greater than 6 mm, the height change rate of the first brush wire group 41 is too gentle to form the sharp portion 451. That is, the contact between the first brush wire group 41 and the tooth surfaces affect the bristles 40 having a higher height from extending into the tooth gap.

In some embodiments, a height difference between the maximum height and a minimum height of the first brush wire group is 1-3.5 mm. A position of the first brush wire group 41 having the maximum height is the transition portion connected to the second brush wire group 42. A position of the first brush wire group 41 having the minimum height is a portion thereof farthest from the second brush wire group 42. By such arrangement, the height change of the first brush wire group 41 is relatively gentle, the contact area of the first brush wire group 41 with the tooth surfaces is large, and the cleaning efficiency is high. Even when the first brush wire group 41 contacts the gums, it is not easy to cause a sharp stinging sensation to the user. When the height difference of the first brush wire group 41 is less than 1 mm, the sharp portion 451 is too gentle and is inconvenient to clean the tooth gap. When the height difference of the first brush wire group 41 is greater than 3.5 mm, the height change of the first brush wire group 41 is relatively drastic, making the sharp portion 451 being too sharp and easy to hurt the gums.

In some embodiments, a height difference between the maximum height and a minimum height of the third brush wire group 43 is 0.5-2.5 mm. By such arrangement, the height of the brush wires of the third brush wire group 43 changes smoothly and adapts to the shape of the teeth, with a larger contact area with the teeth, thereby improving the brushing effect. When the height difference of the third brush wire group 43 is less than 0.5 mm or greater than 2.5 mm, the height of the third brush wire group 43 changes too gentle or too drastically, which affects the contact area of the third brush wire group 43with the teeth.

In some embodiments, a height difference between the maximum height of the first brush wire group 41 and the maximum height of the third brush wire group 43 is 0.5-1.8 mm, and the maximum height of the first brush wire group 41 is greater than the maximum height of the third brush wire group 43. By such arrangement, the height of the second brush wire group 42 and the height of the third brush wire group 43 change smoothly, so that the concave curved surface 44 formed by the second brush surface 421 and the third brush surface 431 better adapt to the shape of the teeth, thereby increasing the contact area of the bristles 40 with the tooth surfaces. When the height difference between the maximum height of the first brush wire group 41 and the maximum height of the third brush wire group 43 is less than 0.5 mm or greater than 1.8 mm, the height of the second brush wire group 42 and the height of the third brush wire group 43 change too gentle or too drastically, which affects the contact area between the bristles 40 and the teeth.

In some embodiments, a height difference between the maximum height of the first brush wire group 41 and the minimum height of the third brush wire group 43 is 1.5-2.5 mm. By such arrangement, the second brush wire group 42 and the third brush wire group 43 change more gentle, adapting to the shape of teeth, avoiding that the bristles 40 cannot contact the teeth when brushing, and improving the brushing effect. When the height difference between the maximum height of the first brush wire group 41 and the minimum height of the third brush wire group 43 is less than 1.5 mm or greater than 2.5 mm, the height of the second brush wire group 42 and the height third brush wire group 43 change too gentle or too drastically, which affects the contact area between the bristles 40 and the teeth.

In some embodiments, a maximum width of the first brush wire group 41 in the width direction Y is less than a maximum width of the second brush wire group 42 in the width direction Y, and the width direction Y is perpendicular to both the length direction X and the thickness direction Z. By such arrangement, the head of the brush head 10 is small. The head of the brush head 10 needs to be inserted between the teeth and facial muscles, if the head is large, it may cause the user to feel uncomfortable.

In some embodiments, a part of the brush wires of the third brush wire group 43 is inclined relative to the brush plate 12. By such arrangement, the brush head is capable of adapting to various holding postures of the user, and the contact area between the brush wires of the third brush wire group 43 and the teeth of the user increases to enhance the overall cleaning ability of the brush head.

In one embodiment, all of the first brush wire clusters 412 and a part of the second brush wire clusters 422 enclose to form a first bristle ring. A part of the third brush wire clusters 222 enclose to form a second bristle ring. When brushing the teeth, the user may use different holding postures. The distribution of the bristles 40 may affect the contact area between bristles 40 and the teeth. By configuring the brush wire clusters in ring shapes, the bristles 40 effectively brush and clean the teeth regardless of the holding posture of the user. The first bristle ring is composed of all of the first brush wire clusters 412 and the second inner brush wire clusters 422a. The second outer brush wire clusters 422b are located between the first bristle ring and the second bristle ring.

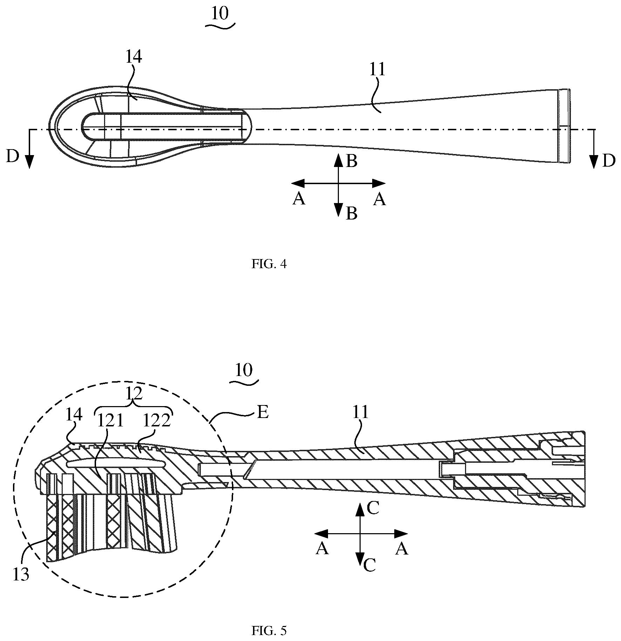

An area of an orthographic projection of the first brush wire clusters of the first bristle ring on the brush plate is S1, an area of an orthographic projection of the second inner brush wire clusters of the first bristle ring on the brush plate is S2, and S1 is greater than S2. As shown in FIG. 4, a sum of areas of orthographic projections of the second inner brush wire clusters 422 a on the brush plate 12 is less than S1.

The bristles 40 further comprise a first middle brush wire cluster 26 and a second middle brush wire cluster 27. The first bristle ring is disposed around the first middle brush wire cluster 26, and the second bristle ring is disposed around the second middle brush wire cluster 27. By such arrangement, a space of the brush plate 12 is fully utilized, so that the brush wire clusters on the brush plate 12 are distributed more evenly, which improves the brushing effect.

A quantity of brush wires of the first brush wire clusters 412 is less than a quantity of brush wires of the third brush wire clusters 432. A density of the first brush wire clusters 412 of the first brush wire group 41 is greater than a density of the third brush wire clusters 432 of the third brush wire group 43. The density of the brush wires of the first brush wire group 41 is relatively large to provide better support and avoid permanent deformation of the brush wires for inserting into the tooth gap. The density of the brush wires of the third brush wire group 43 is relatively small, which reduces the overall structural strength thereof and makes the corresponding bristles relatively easy to deform. Otherwise, on the one hand, it is easy to bring sharp tingling sensations to the gums of the user, and on the other hand, the bristles 40 are easy to deform as a whole, which is not conducive to brushing teeth using the Bass brushing method.

For brush wire clusters adjacent to a periphery of the brush plate 12, a height of the brush wires close to the periphery of the brush plate is less than a height of the brush wires away from periphery of the brush plate, so the gums are prevented from being hurt.

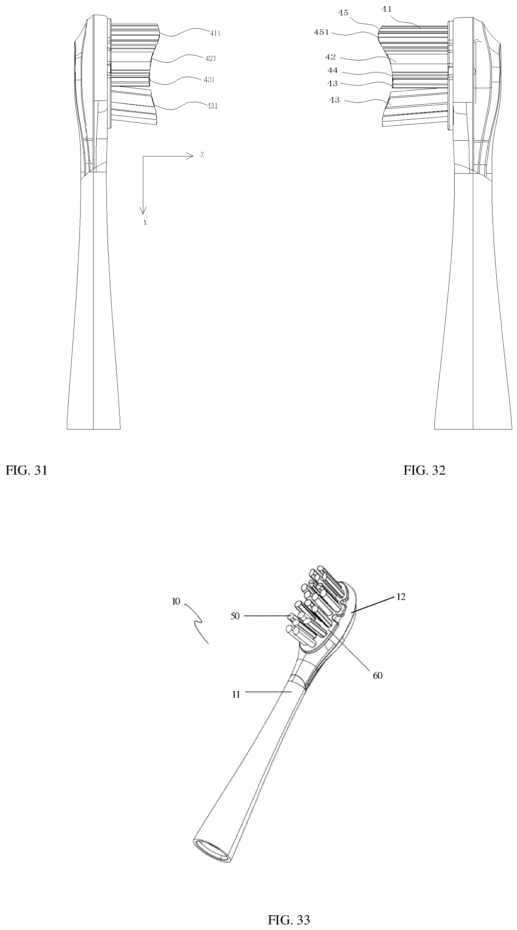

As shown in FIGS. 33-35, in another embodiment, the brush head 10 of the present disclosure comprises a brush rod 11, a brush plate 12, and bristles 50. The brush plate 12 comprises a back plate (not labeled) and a bristle fixing plate 60. In the embodiment, a recess is defined on the back plate of the brush plate 12, and the bristle fixing plate 60 is installed in the recess through bonding, or the bristle fixing plate 60 and the back plate are integrally formed and the bristle fixing plate 60 is fixedly installed in the recess.

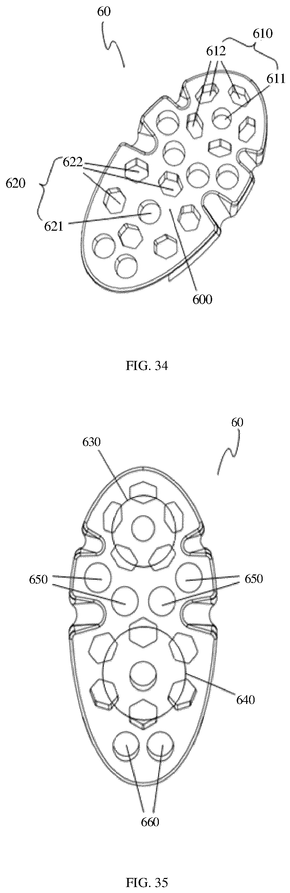

As shown in FIGS. 34 and 35, the bristle fixing plate 60 defines a length direction and a width direction. The width direction is perpendicular to the length direction. Bristle fixing holes configured to fix the bristles 50 are defined on a bristle fixing surface 600 of the bristle fixing plate 60. The bristles 50 are fixed in the bristle fixing holes, so that the bristle fixing plate 60 with the bristles 50 fixed thereon consists a part of the brush head 10. During the brushing process, the bristles 50 fixed in the bristle fixing holes are repeatedly rubbed against the teeth to clean the teeth of the user. Therefore, different arrangements of the bristles 50 on the bristle fixing plate 60 lead to different tooth-brushing effects. Although conventional bristles are neatly disposed, there are gaps between rows or columns of bristle clusters formed by the conventional bristles fixed in bristle fixing holes of a conventional brush head. As a result, some areas of the teeth are not in contact with the conventional bristles, thus affecting a brushing effect.

In the embodiment, the bristle fixing surface 600 of the bristle fixing plate 60 comprises a first bristle fixing hole area 610 and a first bristle fixing hole area 620. The first bristle fixing hole area 610 and the first bristle fixing hole area 620 are disposed in a length direction of the bristle fixing plate 60. The first bristle fixing hole area 610 defines at least one first central bristle fixing hole 611 and first auxiliary bristle fixing holes 612 disposed at intervals around the at least one first central bristle fixing hole 611. The shape (e.g., circular), number, and arrangement of the at least one first central bristle fixing hole 611 can be set as needed, which are not limited thereto. A shape of each of the first auxiliary bristle fixing holes 612, the number of the first auxiliary bristle fixing holes, arrangements of the first auxiliary bristle fixing holes around the at least one first central bristle fixing hole 611 can also be set as needed. The first bristle fixing hole area 620 defines second auxiliary bristle fixing holes 622 disposed at intervals.

Furthermore, the first bristle fixing hole area 610 is close to a free end of the bristle fixing surface 600 of the bristle fixing plate 60. The free end of the bristle fixing surface 600 of the bristle fixing plate 60 is opposite to the one end of the bristle fixing plate 60 connected to the brush rod. A width of the bristle fixing surface 600 of the bristle fixing plate 60 starts from the free end thereof and gradually increases in the length direction of the bristle fixing plate 60, so the width of the bristle fixing surface 600 of the bristle fixing plate 60 increases accordingly. Based on this, a width of the second bristle fixing hole area 620 is generally greater than a width of the first bristle fixing hole area 610, so there is a larger area for arrangements of the second auxiliary bristle fixing holes 622. Namely, a larger size of each of the second auxiliary bristle fixing holes 622 or a greater number of the second auxiliary bristle fixing holes 622 are defined in the second bristle fixing hole area 620, and the second auxiliary bristle fixing holes 622 defined in the second bristle fixing hole area 620 are allowed to have more arrangements. Projections of the bristle fixing holes on the width direction in the length direction of the bristle fixing surface 600 of the bristle fixing plate 60 are defined as first projections. At least part of projections of the second auxiliary bristle fixing holes 622 are located in projection intervals of adjacent first auxiliary bristle fixing holes 612, and/or at least part of projections of the first auxiliary bristle fixing holes 612 are located in projection intervals of adjacent second auxiliary bristle fixing holes 622; so that the first projections of the bristle fixing holes are connected together to form a continuous line segment.

Specifically, when there is a gap between each two adjacent first auxiliary bristle fixing holes 612, the projection intervals are defined between the first projections of the first auxiliary bristle fixing holes 612 that fall in the width direction of the bristle fixing surface 600 of the bristle fixing plate 60 in the length direction of the bristle fixing surface 600 thereof. When the user brushes the teeth, the toothbrush is controlled to move repeatedly in the length direction of the bristle fixing plate 60, and an existence of the projection intervals between the first projections of the first auxiliary bristle fixing holes 612 causes areas of the teeth corresponding to the projection intervals between the first projections of the first auxiliary bristle fixing holes 612 being not in contact with the bristles. However, by arrangements of the second auxiliary bristle fixing holes 622, the first projections of the at least part of the second auxiliary bristle fixing holes 622 falling on the width direction of the bristle fixing plate 60 in the length direction of the bristle fixing surface 600 respectively fill the projection intervals between the first projections of the first auxiliary bristle fixing holes 612. Therefore, first projections of the bristles (i.e., the bristles 50 fixed in all of the bristle fixing holes on the bristle fixing surface 600 of the bristle fixing plate 60) falling on the width direction of the bristle fixing plate 60 in the length direction of the bristle fixing surface 600 of the bristle fixing plate 60 are continuous with no intervals. In this way, when the toothbrush is repeatedly moved in the length direction of the bristle fixing surface 600 to brush the teeth, the first projections of the bristles in the length direction are continuous. Therefore, the teeth are completely in contact with the bristles. Similarly, the first projections of the first auxiliary bristle fixing holes 121 also fill the projection intervals between the first projections of the second auxiliary bristle fixing holes 622 falling on the width direction of the bristle fixing surface 600 of the bristle fixing plate 60 in the length direction of the bristle fixing surface 600 of the bristle fixing plate 60 through the arrangements thereof.

In some embodiments, the second bristle fixing hole area 620 comprises at least one second central bristle fixing hole 621 and the second auxiliary bristle fixing holes 622 disposed around the at least one second central bristle fixing hole 621. The second auxiliary bristle fixing holes 622 are disposed at intervals. At least part of one or more of the first auxiliary bristle fixing holes 612 is located in the projection interval of projections of each two adjacent second auxiliary bristle fixing holes 622. The shape, number, and arrangement of the at least one second central bristle fixing hole 621 can be set as needed, which are not limited thereto. A shape of each of the second auxiliary bristle fixing holes 622, the number of the second auxiliary bristle fixing holes 622, the arrangements of the second auxiliary bristle fixing holes 622 around the at least one second central bristle fixing hole 621 can also be set as needed.

Furthermore, a density of the bristle fixing holes of the first bristle fixing hole area 610 is set to be different with a density of the bristle fixing holes of the first bristle fixing hole area 620 as needed.

The density of the bristle fixing holes refers to a proportion of the bristle fixing holes in a certain area on the bristle fixing surface 600 of the bristle fixing plate 60, and is affected by shapes, sizes, number and arrangements of the bristle fixing holes. Therefore, by setting the arrangements of the bristle fixing holes in the first bristle fixing hole area 610 and the bristle fixing holes in the second bristle fixing hole area 620, the first projections of the bristle fixing holes in the first bristle fixing hole area 610 and the first projections of the bristle fixing holes in the second bristle fixing hole area 620 that fall in the width direction of the bristle fixing surface 600 of the bristle fixing plate 60 in the length direction of the bristle fixing surface 600 of the bristle fixing plate 60 are continuous. For example, each of the bristle fixing holes in the second bristle fixing hole area 620 is disposed between a corresponding projection interval of corresponding first projections of corresponding two adjacent bristle fixing holes in the first bristle fixing hole area 610.

In some embodiments, the density of the bristle fixing holes of the first bristle fixing hole area is greater than the density of the bristle fixing holes of the second bristle fixing hole area, or, a distance between each two adjacent bristle fixing holes in the first bristle fixing hole area is less than a distance between each two adjacent bristle fixing holes in the second bristle fixing hole area. The reason is that when the user inserts the brush head into the oral cavity to brush innermost teeth, due to a limitation of a shape of the oral cavity, a traveling stroke of the brush head is limited. When the brush head moves left and right in the oral cavity, even if the brush head reaches the innermost teeth, the innermost teeth may not completely contact all the bristles, which lead to missed brushing in some areas of the innermost teeth. Therefore, the density of the bristle fixing holes in the first bristle fixing hole area is greater than the density of the bristle fixing holes in the second bristle fixing hole area, or, the distance between each two adjacent bristle fixing holes in the first bristle fixing hole area is less than the distance between each two adjacent bristle fixing holes in the second bristle fixing hole area, so that a cleaning effect of the innermost teeth is effectively improved.

Projections of the bristle fixing holes on the length direction of the bristle fixing surface 600 of the bristle fixing plate 60 in the width direction of the bristle fixing surface 600 of the bristle fixing plate 60 are defined as second projections. A projection of a line segment that connects two bristle fixing holes opposite to each other on outermost sides of the bristle fixing surface 600 of the bristle fixing plate 60 on the length direction in the width direction of the bristle fixing surface 600 of the bristle fixing plate 60 is defined as a third projection. A total length of the second projections is not less than 85% of a length of the third projection.

Specifically, the third projection indicates a distance between the second projections of two furthest bristle fixing holes on the bristle fixing surface 600 of the bristle fixing plate 60. The second projections fall in the length direction of the bristle fixing surface 600 of the bristle fixing plate 60. When there is the gap between each two adjacent bristle fixing holes, there is a projection interval between each two adjacent second projections falling on the length direction of the bristle fixing surface 600 of the bristle fixing plate 60 in the width direction of the bristle fixing surface 600 of the bristle fixing plate 60.

A total length of the second projections of all the bristle fixing holes falling on the length direction of the bristle fixing surface 600 of the bristle fixing plate 60 is at least 85% of the length of the third projection, thereby ensuring that at most 15% of the areas of the teeth are not in contact with the bristles when the toothbrush is repeatedly moved in the width direction of the bristle fixing surface 600 of the bristle fixing plate 60 for brushing, and further ensuring the cleaning effect of the bristles on the teeth. When the total length of the second projections is equal to the length of the third projection, the bristle fixing holes on the bristle fixing surface 600 of the bristle fixing plate 60 are disposed in such a manner that the second projections of all the bristle fixing holes fall in the length direction of the bristle fixing surface 600 of the bristle fixing plate 60 in the width direction of the bristle fixing surface 600 of the bristle fixing plate 60 are continuous with no intervals. In this way, when the toothbrush is repeatedly moved in the width direction of the bristle fixing surface 600 of the bristle fixing plate 60 to brush the teeth, projections of the bristles falling on the length direction in the width direction of the bristle fixing surface 600 of the bristle fixing plate 60 is continuous. Therefore, the teeth are fully in contact with the bristles.

In some embodiments, at least part of the first auxiliary bristle fixing holes 612 is located on a first circumference 630 surrounding the at least one first central bristle fixing hole 611. Centers of the at least part of the first auxiliary bristle fixing holes 612 located on the first circumference 630 are located on the first circumference 630. Shapes and sizes of the first auxiliary bristle fixing holes 612 located on the first circumference 630 are generally the same, which facilitates to disposing the first auxiliary bristle fixing holes 612 located on the first circumference 630 in a circle, and reduces a distance between each two adjacent first auxiliary bristle fixing holes 612 located on the first circumference 630. In addition, at least part of the second auxiliary bristle fixing holes 622 is located on a second circumference 640 surrounding the at least one second central bristle fixing hole 621. Centers of the at least part of the second auxiliary bristle fixing holes 622 located on the second circumference 640 are located on the second circumference 640. Shapes and sizes of the second auxiliary bristle fixing holes 622 located on the second circumference 640 are generally the same, which facilitates to disposing the second auxiliary bristle fixing holes 622 located on the second circumference 640 in a circle, and reduces a distance between each two adjacent second auxiliary bristle fixing holes 622 located on the second circumference 640. The first auxiliary bristle fixing holes 612 located on the first circumference 630 and the second auxiliary bristle fixing holes 622 located on the second circumference 640 are oval, hexagonal, rectangular, etc. Of course, according to actual needs, the shapes or/and sizes of the first auxiliary bristle fixing holes 612 located on the first circumference 630 may be different, and the shapes or/and sizes of the second auxiliary bristle fixing holes 622 located on the second circumference 640 may also be different.

In some embodiments, a hole area of each of the first auxiliary bristle fixing holes 612 located on the first circumference 630 is less than a hole area of each of the second auxiliary bristle fixing holes 622 located on the second circumference 640. Specifically, the hole area of each of the first auxiliary bristle fixing holes 612 located on the first circumference 630 is 50-85% of the hole area of each of the second auxiliary bristle fixing holes 622 located on the second circumference 640.

In some embodiments, an area defined by the first circumference 630 is 45-75% of an area defined by the second circumference 640.

By reasonably setting the shapes, the sizes (or area ratios), and arrangements (or an area ratio of the first circumference to the second circumference) of the first auxiliary bristle fixing holes 612 and the second auxiliary bristle fixing holes 622, a continuous distribution of the first projections of the bristles is realized, which brings a desired cleaning effect of the teeth.

Further, as shown in FIGS. 33 and 34, first reinforcing bristle fixing holes 650 are defined between the first circumference 630 and the second circumference 640. The first reinforcing bristle fixing holes 650 are located in the first bristle fixing hole area 610. The first reinforcing bristle fixing holes 650 are disposed at intervals between the first auxiliary bristle fixing holes 612 and the second auxiliary bristle fixing holes 622 in the width direction. Specifically, the shapes of the first reinforcing bristle fixing holes 650 are different from the shapes of the first auxiliary bristle fixing holes 612 located on the first circumference 630 and the shapes of the second auxiliary bristle fixing holes 622 located on the second circumference 640.

Moreover, the first reinforcing bristle fixing holes 650 are disposed from a minimum distance between the first circumference 630 and the second circumference 640 toward two long sides of the bristle fixing surface 600 of the bristle fixing plate 60. By providing the reinforcing bristle fixing holes 650, the projection intervals between the first projections of the first auxiliary bristle fixing holes 612 on the first circumference 630 and the projection intervals between the first projections of the second auxiliary bristle fixing holes 622 on the second circumference 640 are further filled.

For instance, the first reinforcing bristle fixing holes 650 are disposed in an arc shape. Since an area between the first circumference 630 and the second circumference 640 is relatively wide, more first reinforcing bristle fixing holes 650 may be defined in the area between the first circumference 630 and the second circumference 640 as needed. Furthermore, the shapes of the first reinforcing bristle fixing holes 650 in the area between the first circumference 630 and the second circumference 640 are different with the shapes of the first auxiliary bristle fixing holes 612 located on the first circumference 630 and the shapes of the second auxiliary bristle fixing holes 622 located on the second circumference 640, so that a density of the bristle fixing holes of the area between the first circumference 630 and the second circumference 640 is relatively high.

Furthermore, second reinforcing bristle fixing holes 660 are defined on one side of the second circumference 640 away from the first circumference 630. The second reinforcing bristle fixing holes 660 are located in the second bristle fixing hole area 620. The second reinforcing bristle fixing holes 660 are defined in the intervals between the first auxiliary bristle fixing holes 612 and the second auxiliary bristle fixing holes 622 in the width direction. Therefore, by providing the second reinforcing bristle fixing holes 660, the projection intervals between the first projections of the first auxiliary bristle fixing hole 612 and the first projections of the second auxiliary bristle fixing holes 622 are further filled.

Furthermore, a minimum distance between each two adjacent bristle fixing holes on the bristle fixing surface 600 of the bristle fixing plate 60 is not greater than 3 mm and no less than 0.5 mm. If the distance between each two adjacent bristle fixing holes is too large (greater than 3mm), when the bristles are fixed in the bristle fixing holes, the bristles are sparse, affecting a brushing effect. If the distance between each two adjacent bristle fixing holes is too small (less than 0.5mm), the bristle fixing surface 600 of the bristle fixing plate 60 easily cracks during the fixing process of the bristles, causing the bristle fixing plate 60 to be scrapped.

In the drawings of the embodiments, the same or similar numbers correspond to the same or similar components. In the description of the present disclosure, it should be understood that terms such as "upper", "lower", "left", "right" etc., indicate direction or position relationships shown based on the drawings, and are only intended to facilitate the description of the present disclosure and the simplification of the description rather than to indicate or imply that the indicated device or element must have a specific direction or constructed and operated in a specific direction. Therefore, the terms used to describe positional relationships in the drawings are only for illustrative purposes and cannot be construed as limitations of the present disclosure. For those of ordinary skill in the art, the specific meanings of the above terms can be understood according to specific circumstances.

The above are only optional embodiments of the present disclosure and are not intended to limit the present disclosure. Any modifications, equivalent substitutions, and improvements made within the spirit and principles of the present disclosure shall be included in the protection scope of the present disclosure.

## Claims

1. A brush head, comprising:
a brush rod,
a brush plate,
bristles, and
a soft elastic piece;
wherein the brush rod defines a length direction; the brush plate comprises a bristle fixing plate and a back plate; at least one of the back plate and the bristle fixing plate is connected to the brush rod; the bristle fixing plate comprises a bristle fixing surface, a back surface, and a peripheral side surface; the back surface of the bristle fixing plate is opposite to the bristle fixing surface of the bristle fixing plate; the peripheral side surface of the bristle fixing plate is located between the bristle fixing surface and the back surface of the bristle fixing plate; the bristles are extended from the bristle fixing surface of the bristle fixing plate; the back plate is connected to one side of the bristle fixing plate away from the bristles; a portion of the back plate is spaced apart from the back surface of the bristle fixing plate to define a filling groove; in the length direction, the back plate comprises a first connecting end close to the brush rod and a second connecting end away from the brush rod, and the backplane is connected to the bristle fixing plate through at least one of the first connecting end and the second connecting end thereof;
wherein the soft elastic piece is filled in the filling groove; the soft elastic piece is covered on the back plate and at least a part of the peripheral side surface of the bristle fixing plate.

2. The brush head according to claim 1, wherein the soft elastic piece comprises a first filling portion; the brush plate defines a width direction and a thickness direction; the width direction, the thickness direction, and the length direction are perpendicular to each other; the filling groove penetrates through the brush plate in the width direction to form two filling openings opposite to each other in the width direction; the filling openings allow injecting liquid to flow into the filling groove during an injection molding process; and the injecting liquid is solidified in the filling groove to form the first filling portion.

3. The brush head according to claim 2, wherein in the thickness direction of the brush plate, a thickness of the soft elastic piece at the filling openings is greater than a thickness of the soft elastic piece at other positions, so as to form outer soft rubber contours on a back portion of the brush head.

4. The brush head according to any one of claims 1-3, wherein the brush rod comprises a connecting section connected to the brush plate, and the soft elastic piece is further covered on the connecting section circumferentially.

5. The brush head according to any one of claims 1-4, wherein in the length direction, the filling groove has a first length, the bristle fixing plate has a second length, and a ratio of the first length to the second length is not less than 0.5.

6. The brush head according to any one of claims 1-5, wherein a maximum thickness of the filling groove is not less than 1 mm and is not greater than 5 mm.

7. The brush head according to any one of claims 1-6, wherein in the width direction of the brush plate, the back plate has a first width, the bristle fixing plate has a second width, and the first width is less than the second width.

8. The brush head according to any one of claims 1-7, wherein in the thickness direction of the brush plate, the back plate has a first thickness, the bristle fixing plate has a second thickness, and the first thickness is less than the second thickness.

9. The brush head according to any one of claims 1-8, wherein in the thickness direction of the brush plate, a thickness of the brush plate is not less than 3.5 mm and is not greater than 7 mm.

10. The brush head according to any one of claims 1-9, wherein in the thickness direction of the brush plate, the bristle fixing surface of the bristle fixing plate protrudes from the soft elastic piece, so that the peripheral side surface of the bristle fixing plate is partially exposed to the soft elastic piece.

11. The brush head according to any one of claims 1-10, wherein the back plate is connected to the bristle fixing plate through the first connecting end and the second connecting end thereof, and the filling groove is defined between the first connecting end and the second connecting end of the back plate; or
the back plate is connected to the bristle fixing plate through the first connecting end thereof, the second connecting end of the back plate is suspended, and the filling openings are defined between the second connecting end of the back plate and the back surface of the bristle fixing plate; or
the back plate is connected to the bristle fixing plate through the second connecting end thereof, the first connecting end of the back plate is suspended, and the filling openings are defined between the first connecting end of the back plate and the back surface of the bristle fixing plate.

12. The brush head according to claim 11, wherein the brush plate further comprises at least one connecting portion disposed in the filling groove; the at least one connecting portion connects the back surface of the bristle fixing plate to the back plate; when a plurality of connecting portions are provided, the plurality of connecting portions are disposed at intervals in the length direction.

13. The brush head according to any one of claims 1-12, wherein the bristle fixing plate and the back plate are integrally formed; or
the bristle fixing plate and the brush rod are integrally formed; or
the back plate and the brush rod are integrally formed; or
the bristle fixing plate, the back plate, and the brush rod are integrally formed.

14. The brush head according to any one of claims 1-13, wherein the bristle fixing plate and the back plate are separated pieces, one of the bristle fixing plate and the back plate is integrally formed with the brush rod, the brush head further comprises a connecting piece, the connecting piece is integrally formed with the bristle fixing plate, at least one of the first connecting end and the second connecting end of the back plate is connected to the bristle fixing plate through the connecting piece, and a hardness of the connecting piece and a hardness of the bristle fixing plate are not greater than a hardness of the soft elastic piece.

15. The brush head according to any one of claims 1-14, wherein the bristle fixing plate and the back plate are integrally formed, bristle fixing holes are defined on the bristle fixing surface of the bristle fixing plate, the bristle fixing holes are blind holes, the brush head further comprises copper sheets, roots of the bristles 13 are fixed in the bristle fixing holes through the copper sheets.

16. The brush head according to any one of claims 1-15, wherein the bristle fixing plate and the back plate are separated pieces, the bristle fixing holes are defined on the bristle fixing surface of the bristle fixing plate, the bristle fixing holes are through holes, the roots of the bristles are inserted into the bristle fixing holes and portions of roots of the bristles passing through the back surface of the bristle fixing plate are melted with the bristle fixing plate.

17. The brush head according to any one of claims 1-16, wherein at least one slot is defined on the peripheral side surface of the bristle fixing plate; two ends of the at least one slot respectively extend to the bristle fixing surface of the bristle fixing plate and the back surface of the bristle fixing plate; the at least one slot is communicated with the filling groove; the soft elastic piece further comprises at least one second filling portion filled in the at least one slot; when slots are provided, the slots are disposed at intervals.

18. The brush head according to claim 17, wherein the at least one slot has slot cross sections perpendicular to the thickness direction of the brush plate; the slot cross sections gradually increase in a direction from the back surface to the bristle fixing surface of the bristle fixing plate.

19. The brush head according to claim 17, wherein the peripheral side surface of the bristle fixing plate comprises two sub-side surfaces located on two opposite sides of a central axis of the brush rod, each of the sub-side surfaces of the bristle fixing plate defines the slots, the bristle fixing plate comprises a free end away from the brush rod, sizes of the slots close to the free end of the bristle fixing plate are less than sizes of the slots located in middle portions of the sub-side surfaces of the bristle fixing plate.

20. The brush head according to any one of claims 1-19, wherein the brush plate defines the thickness direction perpendicular to the length direction; the back plate comprises an outer back surface and an outer wall surface; the outer back surface of the back plate is opposite to the bristle fixing surface of the bristle fixing plate in the thickness direction; the outer wall surface of the back plate is disposed between the bristle fixing surface of the bristle fixing plate and the outer back surface of the back plate; the peripheral side surface of the bristle fixing plate and the outer wall surface of the back plate form an outer peripheral surface of the brush plate;
wherein a bonding portion is disposed on the outer peripheral surface of the brush plate; the bonding portion comprises at least one of a first step structure and a ridge structure; first cross sections of the brush plate are perpendicular to the thickness direction of the brush plate; the first cross sections are unchanged or gradually reduced from the bonding portion to the bristle fixing surface of the bristle fixing plate in the thickness direction; second cross sections of the brush plate are perpendicular to the thickness direction of the brush plate; the second cross sections are unchanged or gradually reduced in the thickness direction from the bonding portion to the back surface of the bristle fixing plate, and the bonding portion is covered by the soft elastic piece.

21. The brush head according to claim 20, wherein the brush plate is divided into a first section and a second section in the thickness direction by the bonding portion, the first section comprises the first cross sections, the second section comprises the second cross sections, and each of the first cross sections is less than each of the second cross sections, so as to form the first step structure on the outer peripheral surface of the brush plate, the first step structure comprises a first step surface, and the first step surface thereof is disposed toward the bristle fixing surface of the brush plate.

22. The brush head according to claim 20, wherein the brush plate is divided into a first section and a second section in the thickness direction by the bonding portion, the first section comprises the bristle fixing surface of the bristle fixing plate, the second section comprises the back surface of the bristle fixing plate, the outer peripheral surface of the brush plate defines the slots, the soft elastic piece comprises protrusions respectively embedded in the slots;
wherein the slots are defined in the first section and penetrate to the bristle fixing surface of the brush plate in the thickness direction, or the slots penetrate from the bristle fixing surface of the brush plate to the back surface of the brush plate.

23. The brush head according to claim 22, wherein the slots are defined in the first section; in the thickness direction, the slots extend from the bonding portion to the bristle fixing surface of the brush plate, and cross sections of the protrusions and cross-sections of the slots gradually increase in the thickness direction.

24. The brush head according to claim 20, wherein the brush rod and the brush plate are integrally formed by injection molding; the brush rod comprises a middle cross section perpendicular to the thickness direction; the bonding portion comprises a maximum cross section perpendicular to the thickness direction; the maximum cross section of the bonding portion is coplanar with the middle cross section of the brush rod.

25. The brush head according to claim 20, wherein the brush plate is divided into a first section and a second section in the thickness direction by the bonding portion, the first section comprises the bristle fixing surface of the brush plate, the second section comprises the back surface of the bristle fixing plate, the first section has the first thickness in the thickness direction, the second section has the second thickness in the thickness direction, and the first thickness is less than the second thickness.

26. The brush head according to claim 20, wherein the bonding portion is disposed around the outer peripheral surface of the brush plate.

27. The brush head according to claim 20, wherein the soft elastic piece comprises a sleeving portion, and the sleeving portion is annular and is sleeved on the brush rod.

28. The brush head according to claim 27, wherein the sleeving portion is sleeved on a section of the brush rod close to the brush plat, and a length of the sleeving portion in the length direction is not greater than 20 mm

29. The brush head according to claim 27, wherein the brush rod comprises a first rod section and a second rod section; the first rod section is connected to the brush plate through the second rod section; cross sections of the first rod section perpendicular to the length direction are greater than cross sections of the second rod section perpendicular to the length direction, so that a second step structure is defined between the first rod section and the second rod section; the second step structure comprises a second step surface disposed towards the brush plate; the sleeving portion is sleeved on the second rod section and abuts against the second step surface of the second step structure.

30. The brush head according to claim 29, wherein the brush rod and the brush plate are integrally formed; the brush rod comprises a middle cross section perpendicular to the thickness direction; the second rod section comprises a maximum cross section perpendicular to the thickness direction; the maximum cross section of the second rod section is coplanar with the middle cross section of the brush rod.

31. The brush head according to any one of claims 1-30, wherein the bristles comprise friction increasing clusters, and a surface roughness of the friction increasing clusters is greater than a surface roughness of other bristles.

32. The brush head according to claim 31, wherein the friction increasing clusters comprise brush wires and friction structures, one or more of the friction structures are disposed on an outer surface of each of the brush wires, each of the friction structures protrudes from the outer surface of a corresponding brush wire; or
an outer surface of each of the friction increasing clusters is configured to be uneven to increase a friction coefficient between the outer surface of each of the friction increasing clusters and an object to be brushed; or
the friction increasing clusters comprise main bodies and friction increasing particles, each of the main bodies and corresponding friction increasing particles are integrally formed, and a friction coefficient between the friction increasing particles and the object to be brushed is greater than a friction coefficient between the main bodies and the object to be brushed, so as to increase the friction coefficient between the outer surface of each of the friction increasing clusters and the object to be brushed.

33. The brush head according to any one of claims 1-32, wherein the bristle fixing surface of the bristle fixing plate comprises a first area and a second area; the first area and the second area are located in the length direction; the first area is closer to the brush rod than the second area;
wherein the bristles comprise a first bristle group disposed in the first area and a second bristle group disposed in the second area; the first bristle group at least comprises the friction increasing clusters.

34. The brush head according to any one of claims 31-33, wherein each of the friction increasing clusters comprises a free end and a side wall surface; the free end of each of the friction increasing clusters is away from the bristle fixing surface of the brush plate; the side wall surface of each of the friction increasing clusters is located between the free end of each of the friction increasing clusters and the bristle fixing surface of the brush plate; a friction coefficient between at least one of the free end and the side wall surface of each of the friction increasing clusters and the object to be brushed is greater than a friction coefficient between the other bristles except the friction increasing clusters and the object to be brushed.

35. The brush head according to any one of claims 31-34, wherein an angle between an extension direction of at least part of the friction increasing clusters and the bristle fixing surface of the brush plate is an acute angle or an obtuse angle.

36. The brush head according to any one of claims 31-35, wherein the bristles further comprise color indicating clusters, a color of the color indicating clusters is at least different from a color of the friction increasing clusters, and the color of the color indicating clusters changes with increase of use count and/or use time of the color indicating clusters.

37. The brush head according to any one of claims 1-36, wherein the bristles comprise a first bristle group and a second bristle group, and the first bristle group is closer to the brush rod than the second bristle group;
wherein in a direction perpendicular to the bristle fixing surface of the brush plate, a height of the first bristle group is less than a height of the second bristle group; and/or
in a direction from the brush rod to the brush plate, the height of the first bristle group gradually decreases and the height of the second bristle group gradually increases; and/or
a height of a first end of the first bristle group close to the second bristle group is equal to a height of a first end of the second bristle group close to the first bristle group with respect to the bristle fixing surface of the brush plate.

38. The brush head according to claim 37, wherein with respect to the bristle fixing surface of the brush plate, a height difference between a second end of the first bristle group away from the second bristle group and a second end of the second bristle group away from the first bristle group is not less than 1 mm and not greater than 4 mm.

39. The brush head according to any one of claims 31-38, wherein the bristles further comprise the color indicating clusters, and an area occupied by the friction increasing clusters on the bristle fixing surface of the brush plate is greater than an area occupied by the color indicating clusters on the bristle fixing surface of the brush plate.

40. The brush head according to any one of claims 31-39, wherein the bristles further comprise a first fluorine-containing cluster, and the friction increasing clusters are disposed around the first fluorine-containing cluster; and/or
the bristles further comprise the color-indicating clusters and a second fluorine-containing cluster, and the color-indicating clusters are disposed around the second fluorine-containing cluster.

41. The brush head according to claim 40, wherein the bristles comprise the first bristle group and the second bristle group; the first bristle group is closer to the brush rod than the second bristle group; the first bristle group comprises the friction increasing clusters and the first fluorine-containing cluster; and the second bristle group comprises the color indicating clusters and the second fluorine-containing cluster;
wherein the first bristle group further comprises third fluorine-containing clusters, at least part of third fluorine-containing clusters is disposed on one side of the friction increasing clusters away from the color indicating clusters; and/or
the second bristle group further comprises fourth fluorine-containing clusters; at least part of the fourth fluorine-containing clusters is disposed between the color indicating clusters and the friction increasing clusters.

42. The brush head according to claim 40, wherein the bristles comprise the first bristle group and the second bristle group; the first bristle group is closer to the brush rod than the second bristle group, the first bristle group comprises the friction increasing clusters and the first fluorine-containing cluster, and the second bristle group comprises the color indicating clusters and the second fluorine-containing cluster;
the color of the friction increasing clusters, the color of the color indicating clusters, a color of the first fluorine-containing cluster are different from each other, and the color of the first fluorine-containing cluster is same as a color of the second fluorine-containing cluster.

43. The brush head according to claim 42, wherein the bristle fixing surface of the brush plate has two edge lines symmetrically disposed with respect to the length direction, the two edge lines are arc-shaped; from one side of the two edge lines close to the brush rod to one side of the two edge lines away from the brush rod; a distance between each of the two edge lines and the length direction increases first and then decreases.

44. The brush head according to any one of claims 1-43, wherein the bristles comprise a first brush wire group, a second brush wire group, and a third brush wire group; the first brush wire group, the second brush wire group; the third brush wire group are sequentially distributed in the length direction and have a height; brush wires of the first brush wire group, brush wires of the second brush wire group; brush wires of the third brush wire group are fixed to the brush plate and extend out of the bristle fixing surface of the brush plate in the thickness direction;
a height of the first brush wire group is a length of the brush wires thereof extending out of the bristle fixing surface of the brush plate in the thickness direction; a height of the second brush wire group is a length of the brush wires thereof extending out of the bristle fixing surface of the brush plate in the thickness direction; a height of the third brush wire group is a length of the brush wires thereof extending out of the bristle fixing surface of the brush plate in the thickness direction;
tips of the brush wires of the first brush wire group define a first brush surface, tips of the brush wires of the second brush wire group define a second brush surface, and tips of the brush wires of the third brush wire group define a third brush surface;
in the length direction, the height of the first brush wire group gradually increases, the height of the second brush wire group gradually decreases, and the height of the third brush wire group gradually increases;
the second brush surface and the third brush surface form a concave curved surface, and a transmission portion of the second brush surface and the first brush surface form a convex curved surface arched away from the bristle fixing surface of the brush plate.

45. The brush head according to claim 44, wherein a maximum height of the third brush wire group is less than a maximum height of the first brush wire group.

46. The brush head according to claim 44 or claim 45, wherein a length of the first brush wire group in the length direction is A, a length of the bristles in the length direction is B, and 1/10 ≤ A: B ≤ 1/3.

47. The brush head according to any one of claims 44-46, wherein in the length direction, a height change rate of the first brush wire group is less than a height change rate of the second brush wire group.

48. The brush head according to any one of claims 46-47, wherein the length of the first brush wire group in the length direction is less than the length of the second brush wire group in the length direction; the second brush wire group comprises a first distribution section and a second distribution section; in the length direction, the first distribution section is connected to the first brush wire group, and the second distribution section is connected to the third brush wire group; in the length direction, a height change rate of the first distribution section is greater than the height change rate of the first brush wire group, and the height change rate of the first brush wire group is greater than a height change rate of the second distribution section.

49. The brush head according to claim 48, wherein a sum of an area of an orthographic projection of the first brush wire group on the bristle fixing surface of the brush plate and an area of an orthographic projection of the first section on the bristle fixing surface of the brush plate is less than a sun of an area of an orthographic projection of the second section on the bristle fixing surface of the brush plate and an area of an orthographic projection of the third brush wire group on the bristle fixing surface of the brush plate.

50. The brush head according to any one of claims 44-49, wherein the length of the first brush wire group in the length direction is 2-6 mm.

51. The brush head according to any one of claims 44-50, wherein a height difference between the maximum height and a minimum height of the first brush wire group is 1-3.5 mm.

52. The brush head according to any one of claims 44-51, wherein a height difference between the maximum height and a minimum height of the third brush wire group is 0.5-2.5 mm.

53. The brush head according to any one of claims 44-52, wherein a height difference between the maximum height of the first brush wire group and the maximum height of the third brush wire group is 0.5-1.8 mm, and the maximum height of the first brush wire group is greater than the maximum height of the third brush wire group.

54. The brush head according to any one of claims 44-53, wherein a height difference between the maximum height of the first brush wire group and the minimum height of the third brush wire group is 1.5-2.5 mm.

55. The brush head according to any one of claims 44-54, wherein a maximum width of the first brush wire group in the width direction is less than a maximum width of the second brush wire group in the width direction, and the width direction is perpendicular to both the length direction and the thickness direction.

56. The brush head according to any one of claims 44-55, wherein a part of the brush wires of the third brush wire group is inclined relative to the bristle fixing surface of the brush plate.

57. The brush head according to any one of claims 44-56, wherein the first brush wire group comprises first brush wire clusters; the second brush wire group comprises second brush wire clusters; the third brush wire group comprises third brush wire clusters, all of the first brush wire clusters and a part of the second brush wire clusters enclose to form a first bristle ring; and a part of the third brush wire clusters enclose to form a second bristle ring.

58. The brush head according to claim 57, wherein an area of an orthographic projection of the first brush wire clusters of the first bristle ring on the bristle fixing surface of the brush plate is S1, and an area of an orthographic projection of the part of the second brush wire clusters of the first bristle ring on the bristle fixing surface of the brush plate is S2, and S1 is greater than S2.

59. The brush head according to claim 57, wherein the bristles further comprise a first middle brush wire cluster and a second middle brush wire cluster, the first bristle ring is disposed around the first middle brush wire cluster, and the second bristle ring is disposed around the second middle brush wire cluster.

60. The brush head according to claim 57, wherein a quantity of brush wires of the first brush wire clusters is less than a quantity of brush wires of the third brush wire clusters, and a density of the first brush wire clusters of the first brush wire group is greater than a density of the third brush wire clusters of the third brush wire group.

61. The brush head according to claim 57, wherein for brush wire clusters adjacent to a periphery of the brush plate, a height of the brush wires close to the periphery of the brush plate is less than a height of the brush wires away from periphery of the brush plate.

62. The brush head according to any one of claims 1-61, wherein the bristle fixing plate defines the width direction perpendicular to the length direction; bristle fixing holes configured to fix the bristles are defined on the bristle fixing surface of the bristle fixing plate; the bristle fixing surface of the bristle fixing plate comprises a first bristle fixing hole area and a first bristle fixing hole area; the first bristle fixing hole area and the first bristle fixing hole area are disposed in the length direction; the first bristle fixing hole area defines at least one first central bristle fixing hole and first auxiliary bristle fixing holes; the first auxiliary bristle fixing holes are disposed at intervals around the at least one first central bristle fixing hole; the first bristle fixing hole area defines second auxiliary bristle fixing holes disposed at intervals; a density of the bristle fixing holes of the first bristle fixing hole area differs from a density of the bristle fixing holes of the first bristle fixing hole area;
wherein projections of the bristle fixing holes on the width direction in the length direction are defined as first projections; at least part of projections of the second auxiliary bristle fixing holes are located in projection intervals of adjacent first auxiliary bristle fixing holes, and/or at least part of projections of the first auxiliary bristle fixing holes are located in projection intervals of adjacent second auxiliary bristle fixing holes; so that the first projections of the bristle fixing holes are connected together to form a continuous line section.

63. The brush head according to claim 62 wherein the first bristle fixing hole area is close to the free end of the bristle fixing surface of the bristle fixing plate;
wherein the first bristle fixing hole area comprises at least one second central bristle fixing hole and second auxiliary bristle fixing holes disposed at intervals around the second central bristle fixing hole;
wherein at least part of the first auxiliary bristle fixing holes is located in an interval between projections of two adjacent second auxiliary bristle fixing holes.

64. The brush head according to claim 63, wherein at least part of the first auxiliary bristle fixing holes is located on a first circumference surrounding the at least one first central bristle fixing hole, and at least part of the second auxiliary bristle fixing holes is located on a second circumference surrounding the at least one second central bristle fixing hole.

65. The brush head according to claim 64, wherein an area enclosed by the first circumference is 45%-75% of an area enclosed by the second circumference.

66. The brush head according to claim 64, wherein a hole area of each of the first auxiliary bristle fixing holes located on the first circumference is less than a hole area of each of the second auxiliary bristle fixing holes located on the second circumference.

67. The brush head according to claim 66, wherein the hole area of each of the first auxiliary bristle fixing holes located on the first circumference is 50%-85% of the hole area of each of the second auxiliary bristle fixing holes located on the second circumference.

68. The brush head according to claim 64, wherein the first auxiliary bristle fixing holes located on the first circumference and the second auxiliary bristle fixing holes located on the second circumference are oval, hexagonal, or rectangular.

69. The brush head according to claim 64, wherein first reinforcing bristle fixing holes are defined between the first circumference and the second circumference; the first reinforcing bristle fixing holes are located in the first bristle fixing hole area; the first reinforcing bristle fixing holes are disposed at intervals between the first auxiliary bristle fixing holes and the second auxiliary bristle fixing holes in the width direction.

70. The brush head according to claim 69, wherein shapes of the first reinforcing bristle fixing holes are different from shapes of the first auxiliary bristle fixing holes located on the first circumference and shapes of the second auxiliary bristle fixing holes located on the second circumference.

71. The brush head according to claim 64, wherein second reinforcing bristle fixing holes are defined on one side of the second circumference away from the first circumference; the second reinforcing bristle fixing holes are located in the second bristle fixing hole area; the second reinforcing bristle fixing holes are defined in intervals between the first auxiliary bristle fixing holes and the second auxiliary bristle fixing holes in the width direction.

72. The brush head according to any one of claims 63-71, wherein a minimum distance between adjacent bristle fixing holes is not greater than 3 mm and not less than 0.5 mm.

73. The brush head according to claim 62, wherein projections of the bristle fixing holes on the length direction of the bristle fixing surface of the bristle fixing plate in the width direction of the bristle fixing surface of the bristle fixing plate are defined as second projections;
wherein a projection of a line segment that connects two bristle fixing holes opposite to each other on outermost sides of the bristle fixing surface of the bristle fixing plate on the length direction in the width direction of the bristle fixing surface of the bristle fixing plate is defined as a third projection;
a total length of the second projections is not less than 85% of a length of the third projection.

74. The brush head according to claim 62, wherein a groove is define din the back plate, the bristle fixing plate is mounted in the groove by adhering or integrally formed with the back plate.

75. An electric toothbrush, comprising: the brush head according to any one of claims 1-74; and
a brush handle assembly;
wherein the brush handle assembly is detachably connected to the brush head.
